(19) Europäisches Patentamt
European Patent Office
Office européen des brevets

(11) **EP 3 609 213 B1**

(12) **EUROPÄISCHE PATENTSCHRIFT**

(45) Veröffentlichungstag und Bekanntmachung des Hinweises auf die Patenterteilung:
**13.07.2022 Patentblatt 2022/28**

(21) Anmeldenummer: **18187480.1**

(22) Anmeldetag: **06.08.2018**

(51) Internationale Patentklassifikation (IPC):
**H04W 16/18** (2009.01)    **H04W 36/00** (2009.01)
**H04W 24/02** (2009.01)

(52) Gemeinsame Patentklassifikation (CPC):
**H04W 16/18; H04W 24/02; H04W 36/0083**

(54) **VERFAHREN ZUR GEOMETRISCHEN PLANUNG VON NACHBARSCHAFTEN VON MOBILFUNKSTANDORTEN IN EINEM MOBILFUNKNETZ**

METHOD FOR GEOMETRIC PLANNING OF VICINITIES OF MOBILE RADIO LOCATIONS IN A MOBILE RADIO NETWORK

PROCÉDÉ DE CONCEPTION GÉOMÉTRIQUE DES ZONES DE VOISINAGE DES EMPLACEMENTS DE L'ÉQUIPEMENT DE TÉLÉPHONIE MOBILE DANS UN RÉSEAU DE TÉLÉPHONIE MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.02.2020 Patentblatt 2020/07**

(73) Patentinhaber: **Deutsche Telekom AG**
**53113 Bonn (DE)**

(72) Erfinder: **Barenthin, Peter**
**15738 Zeuthen (DE)**

(74) Vertreter: **Raible Deissler Lehmann Patentanwälte PartG mbB**
**Senefelderstrasse 26**
**70176 Stuttgart (DE)**

(56) Entgegenhaltungen:
**WO-A1-2009/083035**

**Beschreibung**

Die vorliegende Erfindung betrifft ein Verfahren zur geometrischen Planung von Nachbar-Mobilfunkstandorten zu einem Ausgangs-Mobilfunkstandort in einem Mobilfunknetz. Ferner betrifft die vorliegende Erfindung ein Computerprogrammprodukt mit einem computerlesbaren Medium und einem auf dem computerlesbaren Medium gespeicherten Computerprogramm mit Programmcodemitteln, die, wenn das Computerprogramm in ein Speichermedium einer Recheneinheit geladen und durch einen Prozessor der Recheneinheit ausgeführt wird, das erfindungsgemäße Verfahren ausführen.

Ein typischer Mobilfunkstandort strahlt in der Regel in drei Himmelsrichtungen pro Mobilfunktechnik aus. Diese drei Himmelsrichtungen sind bspw. 0° (nördlich), 120° (südöstlich) und 240° (südwestlich). Bei den Techniken handelt es sich in der Regel um GSM, UMTS und LTE. Diese Strahlrichtungen werden auch als Sektoren des jeweiligen Mobilfunkstandorts bezeichnet. Die Flächen, auf denen ein jeweiliger Sektor die beste Versorgung im Vergleich zu benachbarten Sektoren liefert, werden auch Funkzellen bzw. Zellen genannt. Bewegt sich ein Funktelefon mit einer Funkverbindung, kurz Verbindung, durch das Mobilfunknetz, so wird diese Funkverbindung von Funkzelle zu Funkzelle übertragen bzw. übergeben. Diese Verbindungsübergaben, auch Handover genannt, werden durch Verkehrsmessungen gezählt. Dabei wird bspw. von Funkzelle A zu Funkzelle B eine Stückzahl der durchgeführten Handover pro Tag gezählt. Damit Verbindungen von Funkzelle A zu Funkzelle B übergeben werden können, müssen die betroffenen Funkzellen A und B Nachbarn sein, weil Funkzelle A vor einem Handover einige Parameter der Nachbarzelle bzw. der Funkzelle B an das Funktelefon übertragen muss und demnach der Funkzelle A als Ausgangs-Funkzelle bzw. als Ausgangs-Mobilfunkstandort diese Parameter bekannt oder zumindest zugänglich sein müssen. Diese Zugänglichkeit zu einer entsprechenden Datenbank bzw. zu den erforderlichen Parametern wird dadurch gewährleistet, dass die Funkzelle A und die Funkzelle B als Nachbarn registriert und entsprechend hinterlegt sind. Diese Nachbarschaften werden in einem sogenannten Nachbarschafts-Planungsprozess festgelegt, so dass genau bekannt und von jeweiligen Funkzellen bzw. Mobilfunkstandorten abrufbar ist, welche Funkzellen als ihre jeweiligen Nachbarfunkzellen bzw. Nachbar-Mobilfunkstandorte festgelegt sind. Ausgehend von einer Funkzelle A bzw. einem Mobilfunkstandort A kann ein Handover nur zu im Vorfeld festgelegten Nachbarfunkzellen bzw. Nachbar-Mobilfunkstandorten erfolgen.

Das von der Telekom bekannte Planungstool PegaPlan® bietet die Möglichkeit einer Berechnung von Nachbarschaften, d. h. von Nachbar-Mobilfunkstandorten für neue Mobilfunkstandorte oder für alle Mobilfunkstandorte mit und ohne bereits vorhandenen Nachbar-Mobilfunkstandorten. Es besteht auch die Möglichkeit einer händischen Nachbarschaftsplanung im Planungstool PegaPlan®. Dabei werden auf einer Kartendarstellung Funkzellen bzw. damit assoziierte Mobilfunkstandorte angezeigt, so dass bspw. mit einem Cursor gewünschte Nachbar-Mobilfunkstandorte markiert und gespeichert werden können sowie auch nicht gewünschte Nachbar-Mobilfunkstandorte gelöscht werden können. Ferner können Nachbarschaften auch direkt in einer Planungsdatenbank, bspw. in der sogenannten Planungsdatenbank PegaBase® editiert werden. In dieser Datenbank werden die geplanten Mobilfunkstandorte bzw. die damit verbundenen Funknetzdaten verwaltet, um sie bspw. ins Mobilfunknetz einzubringen. Das Planungstool PegaPlan® liest die Nachbarschaften aus dieser Datenbank aus und schreibt sie nach einer Bearbeitung dorthin zurück.

Inzwischen bietet die bekannte LTE-Technik auch die Möglichkeit einer automatischen Erkennung von Nachbarzellen bzw. Nachbar-Mobilfunkstandorten innerhalb eines LTE-Layers bzw. eines LTE-Netzes. Dabei werden diese Nachbarschaften auf Grundlage von Messungen durch Funktelefone festgelegt. Für einen Code-Planungsprozess werden diese Nachbarschaften regelmäßig aus dem Mobilfunknetz ausgelesen und in die Planungsdatenbank PegaBase® eingespielt. Bei dem Code-Planungsprozess wird jeder Funkzelle eine kurze, aber dennoch eindeutige Identität (Code) zugeordnet. Da eine Anzahl zu vergebender, d. h. zuzuordnender Codes begrenzt ist, gleichzeitig jedes Funktelefon aber jeden Code nur von exakt einer Funkzelle empfangen darf, muss eine Verteilung der Codes auf die Funkzellen innerhalb des Netzes genau geplant werden (Code-Planung). Eine automatische Erkennung von IRAT (Inter-Radio Access)-Nachbarschaften, d. h. von Nachbarschaften zwischen Funkzellen unterschiedlicher Technologien, d. h. LTE nach UMTS und LTE nach GSM, ist inzwischen angekündigt, aber noch nicht umgesetzt.

In der WO 2009/083035 A1 ist ein Verfahren zum Aufrüsten eines auf dem Feld bereitgestellten drahtlosen Mobilkommunikationsnetzwerks beschrieben, das umfasst: Erfassen von Netzwerkereignissen aus dem drahtlosen Mobilkommunikationsnetzwerk; Abrufen von Netzwerksimulationsdaten von einem automatisierten Netzwerksimulationsplanungstool; Kombinieren der erfassten Netzwerkereignisse und der Netzwerksimulationsdaten, um Diagnoseanzeigen abzuleiten, die angepasst sind, um kritische Zustände in einer aktuellen Netzwerkkonfiguration nachzuweisen; und Ändern der aktuellen Netzwerkkonfiguration, um die kritischen Zustände zu überwinden.

In einem Verkehrsmesssystem ist es möglich, eine Zahl von Verbindungsübergaben, d. h. eine Handover-Anzahl einer bestimmten Funkzelle bzw. eines damit assoziierten Mobilfunkstandorts zu allen geplanten Nachbar-Funkzellen bzw. -Mobilfunkstandorten anzuzeigen. Anhand dieser Daten ist feststellbar, welche der geplanten Nachbar-Mobilfunkstandorte bzw. welche der damit assoziierten benachbarten Funkzellen ausgehend von der bestimmten Funkzelle wie stark genutzt werden. Ferner ist auch hier erkennbar, welche Nachbar-Mobilfunkstandorte bzw. welche damit assoziierten Funkzellen als Nachbar-Mobilfunkstandorte nicht (mehr) notwendig sind und ggf. gelöscht werden können. Ein Löschen von Nachbar-Mobilfunkstandorten bzw. einer oder mehrerer der damit assoziierten Funkzellen aus den für den Ausgangs-Mobilfunkstandort geplanten Nachbar-Mobilfunkstandorten öffnet notwendige Freiräume zur Frequenz- und Codeplanung. Die Handover-Anzahlen können als Messergebnisse auch aus dem Verkehrsmesssystem exportiert werden, um woanders weiterverarbeitet zu werden.

Im bereits voranstehend genannten Funknetz-Planungstool PegaPlan® ist es möglich, Mobilfunkstandorte mit ihren jeweiligen Sektoren und Antennenrichtungen und den sich daraus ergebenden Funkzellen anzeigen zu lassen. Dabei können auch diverse Daten hinterlegt werden, wie bspw. Landkarten, Verkehrswege etc. Fehlende Nachbar-Mobilfunkstandorte können sich bislang bspw. aus Kundenbeschwerden, wie bspw. zu Gesprächsabbrüchen auf Verkehrswegen, ergeben. Eine weitere Erkennung von fehlenden Nachbar-Mobilfunkstandorten ist eine Auswertung von Funkmessfahrten, die regelmäßig auf Hauptverkehrswegen stattfinden. Außerdem ergeben sich solche Funkmessfahrten aus verschiedenen Auswertungen, wie bspw. einer Bearbeitung von Kundenbeschwerden, einer Begleitung von Pilotuntersuchungen, einer Bearbeitung von Problemfällen, die in anderen Verkehrsmessungen auffallen. Ferner gibt es noch selbstständig messende Systeme, die Funkmessdaten aufzeichnen. Diese werden als sogenannte Black-Boxes bezeichnet und befinden sich in der Regel bspw. in Taxis und/oder Zügen. Auch mit Hilfe dieser Funkmessdaten können fehlende Nachbar-Mobilfunkstandorte erkannt werden. Durch die genannten Verfahren ist ein Erkennen fehlender Nachbar-Mobilfunkstandorte punktuell oder auch streckenbezogen auf bekannten Verkehrswegen möglich.

Allerdings ist es nicht möglich, fehlende und/oder unnötige Nachbar-Mobilfunkstandorte zu einem Ausgangs-Mobilfunkstandort regelmäßig, systematisch und flächendeckend zu erkennen.

Es war demnach eine Aufgabe der vorliegenden Erfindung, ein Verfahren und ein geeignetes Computerprogrammprodukt vorzuschlagen, welche eine geometrische Nachbarschaftsplanung für einen Mobilfunkstandort erlauben, die die genannten Nachteile der voranstehend beschriebenen und bereits bekannten Verfahren ausräumt.

Zur Lösung dieser Aufgabe wird ein Verfahren mit den Merkmalen von Patentanspruch 1 bereitgestellt. Ausgestaltungen und Vorteile sind den jeweiligen Unteransprüchen und der Beschreibung zu entnehmen.

Die vorliegende Erfindung betrifft ein Verfahren zur geometrischen Planung von Nachbar-Mobilfunkstandorten zu einem Ausgangs-Mobilfunkstandort in einem Mobilfunknetz. Dabei weisen der Ausgangs-Mobilfunkstandort und jeder Nachbar-Mobilfunkstandort je mindestens eine Mobilfunkantenne, auch Sektorantenne genannt, mit einer Hauptstrahlrichtung bzw. Antennenstrahlrichtung auf. Auf Basis von geographischen Koordinaten des Ausgangs-Mobilfunkstandorts, von geographischen Koordinaten von geplanten Nachbar-Mobilfunkstandorten und von geographischen Koordinaten von potentiellen Nachbar-Mobilfunkstandorten, und deren jeweiligen Hauptstrahlrichtungen werden als Parameter mindestens eine durchschnittliche Entfernung der geplanten Nachbar-Mobilfunkstandorte zum Ausgangs-Mobilfunkstandort, eine relative Entfernung für jeden Nachbar-Mobilfunkstandort zum Ausgangs-Mobilfunkstandort und für jeden Nachbar-Mobilfunkstandort ein Wichtungswert W, wie die mindestens eine jeweilige Antenne zu der mindestens einen Antenne des Ausgangs-Mobilfunkstandorts ausgerichtet ist, bestimmt. Ferner werden für den Ausgangs-Mobilfunkstandort Handover-Messdaten ermittelt und in einer Datenbank abgelegt. Bei dem erfindungsgemäßen Verfahren werden die bestimmten Parameter für jeden Nachbar-Mobilfunkstandort miteinander über einen vorgegebenen mathematischen Zusammenhang korreliert. Auf Basis einer Prüfung von vorgegebenen Bedingungen für die so miteinander korrelierten Parameter für jeden Nachbar-Mobilfunkstandort und unter Berücksichtigung der ermittelten Handover-Messdaten werden bei den geplanten Nachbar-Mobilfunkstandorten fehlende und/oder unnötige Nachbar-Mobilfunkstandorte identifiziert und angezeigt und darauf basierend eine Liste der geplanten Nachbar-Mobilfunkstandorte aktualisiert und Funkfrequenzen und/oder Codes innerhalb des Mobilfunknetzes den geplanten Nachbar-Mobilfunkstandorten der aktualisierten Liste jeweils zugewiesen.

Ein Code oder eine Cell-ID, d. h. eine Mobilfunkzellenidentifikation ist eine eindeutige Kennzahl, welcher bzw. welche einer Funkzelle zugeordnet ist bzw. wird. Der einer Funkzelle zugeordnete Code dient u. a. dazu, eine Verbindungsübergabe, d. h. ein Handover (HO) zwischen dieser Funkzelle und einer weiteren Funkzelle technisch zu ermöglichen. Einem Ausgangs-Mobilfunkstandort werden nämlich durch die Planung seiner Nachbar-Mobilfunkstandorte die letztlich festgelegten Nachbar-Mobilfunkstandorte mittels deren jeweils zugeordneten Codes bekannt gemacht, so dass ausgehend von dem Ausgangs-Mobilfunkstandort eindeutig definiert ist, zu welchen Mobilfunkstandorten, d. h. nämlich nur zu den hinterlegten Nachbar-Mobilfunkstandorten, ein Handover möglich ist. Genau genommen werden jedem Sektor bzw. jeder Funkzelle des Ausgangs-Mobilfunkstandorts Nachbar-Sektoren bzw. -Funkzellen von entsprechenden Nachbar-Mobilfunkstandorten bei der Planung zugeordnet und als solche hinterlegt, so dass für jede Funkzelle des Ausgangs-Mobilfunkstandorts die Codes und anderen für ein Handover notwendigen Parameter jeweiliger zugeordneter Nachbar-Funkzellen von Nachbar-Mobilfunkstandorten abrufbar sind.

Potentielle Nachbar-Mobilfunkstandorte sind alle außer den geplanten Nachbar-Mobilfunkstandorten vorhandenen Standorte der Umgebung des Ausgangs-Mobilfunkstandorts. Geplante Nachbar-Mobilfunkstandorte sind als Nachbarn für den Ausgangs-Mobilfunkstandort vorgesehene Mobilfunkstandorte, die als solche in einer für den Ausgangs-Mobilfunkstandort zugänglichen Datenbank, wie bspw. PegaBase®, hinterlegt und für ein potentielles Handover ausgehend von dem Ausgangs-Mobilfunkstandort zur Verfügung stehen bzw. stehen sollen. Das bedeutet, dass dem Ausgangs-Mobilfunkstandort alle für ein Handover notwendigen Parameter der geplanten Nachbar-Mobilfunkstandorte bekannt oder zumindest zugänglich gemacht werden bzw. sind.

Die potentiellen Nachbar-Mobilfunkstandorte werden aus den Nachbarn der geplanten Nachbar-Mobilfunkstandorte ermittelt.

In der Regel strahlt jeder Mobilfunkstandort bzw. dessen mindestens eine Antenne in drei Himmelsrichtungen pro Technik bzw. Mobilfunktechnik, d. h. bspw. GSM, UMTS, LTE, und umfasst demnach drei Sektoren pro Technik, wobei in der Regel jedem Sektor eine Antenne, eine sogenannte Sektorantenne, zugeordnet ist. Die Flächen, auf denen ein jeweiliger Sektor eine beste Versorgung im Vergleich zu benachbarten Sektoren liefert, werden auch Funkzellen genannt. Demnach lassen sich einem Mobilfunkstandort mindestens eine, in der Regel mehrere, Funkzellen pro Technik zuordnen, die durch die Sektoren definiert werden bzw. sind. Im Folgenden werden die geographischen bzw. geometrischen Koordinaten des Ausgangs-Mobilfunkstandorts gleichgesetzt mit den geographischen bzw. geometrischen Koordinaten des dem Ausgangs-Mobilfunkstandort zugeordneten Mobilfunksendemasts und somit der davon umfassten Mobilfunkantennen. Gleiches gilt für die jeweiligen Koordinaten der jeweiligen Nachbar-Mobilfunkstandorte. Die mit den jeweiligen Mobilfunkantennen bzw. den Sektoren assoziierten Funkzellen bzw. die darüber definierten Funkzellen werden geographisch bzw. geometrisch ebenfalls mit den geographischen bzw. geometrischen Koordinaten des jeweiligen Mobilfunkstandorts assoziiert bzw. diesen zugeordnet.

Um die geometrische Planung von Nachbar-Mobilfunkstandorten zu einem Ausgangs-Mobilfunkstandort in eine Mobilfunknetz gemäß dem erfindungsgemäß vorgeschlagenen Verfahren durchzuführen, ist es in der Regel notwendig, jeden Sektor, der mit dem Ausgangs-Mobilfunkstandort assoziiert ist, gesondert zu betrachten und für ihn die Verfahrensschritte durchzuführen. Das bedeutet, dass in der Regel für einen Ausgangs-Mobilfunkstandort drei Funkzellen bzw. drei Sektoren mit jeweilig einer diesen Sektoren jeweilig zugeordneten Antenne zu betrachten sind. Entsprechend sind auch die Nachbar-Mobilfunkstandorte hinsichtlich der von ihnen in der Regel umfassten drei Sektoren und damit assoziierten drei Antennen zu betrachten. Für jede 2er Kombination bzw. für jede paarweise Kombination eines jeweiligen Sektors des Ausgangs-Mobilfunkstandorts mit einem jeweiligen Sektor eines jeweiligen Nachbar-Mobilfunkstandorts ist ein jeweiliger Wichtungswert zu bestimmen. Die für die zu berechnenden Entfernungen benötigen geographischen bzw. geometrischen Koordinaten sind dabei stets gleichzusetzen mit den geographischen bzw. geometrischen Koordinaten des jeweiligen mit dem Mobilfunkstandort assoziierten Mobilfunksendemasten.

Der Wichtungswert wird auf Basis einer vorgegebenen mathematischen Formel bzw. Funktion f berechnet: $W = f(C_A, C_N)$, wobei $C_A$ Strahl- und Lagedaten des Ausgangs-Mobilfunkstandorts und $C_N$ Strahl- und Lagedaten eines jeweiligen Nachbar-Mobilfunkstandorts angibt. Im Fall, dass der Ausgangs-Mobilfunkstandort bspw. drei Funkzellen aufweist, sind entsprechend der drei Sektorantennen drei verschiedene Strahldaten zu betrachten; die Lagedaten bzw. die geographischen Koordinaten sind für alle Funkzellen gleich denen des Ausgangs-Mobilfunkstandorts. Entsprechendes gilt für jeweilige Funkzellen eines jeweiligen Nachbar-Mobilfunkstandorts. Jede Funkzelle des Ausgangs-Mobilfunkstandorts ist, wie bereits voranstehend beschrieben, gesondert zu betrachten und bei Betrachtung eines Nachbar-Mobilfunkstandorts mit ebenfalls drei Funkzellen mit jeder dieser drei Funkzellen in Kombination zu betrachten. Das bedeutet, dass es bei Betrachtung eines Ausgangs-Mobilfunkstandorts mit drei Funkzellen und eines Nachbar-Mobilfunkstandorts mit ebenfalls drei Funkzellen zu einer Bestimmung von neun Wichtungswerten $W_i$ (i = 1, ..., 9) kommt. Für jeden Wichtungswert $W_i$ werden die vorgegebenen Bedingungen, wobei die relative Entfernung für alle Funkzellen gleich der des Nachbar-Mobilfunkstandorts ist, gesondert geprüft, um festzustellen, welche Paare von Funkzellen des Ausgangs-Mobilfunkstandorts und des Nachbar-Mobilfunkstandorts gut zueinander ausgerichtet sind und demnach, welche Funkzellen des Nachbar-Mobilfunkstandorts in der Liste der geplanten Nachbar-Funkzellen verbleiben bzw. aufzunehmen sind. Optional werden dabei noch die ermittelten Handover-Daten berücksichtigt.

Die so für jeden Sektor bestimmten Parameter und Handover- (HO-) Messdaten können nun für jeden Sektor des Ausgangs-Mobilfunkstandorts gesondert oder für alle Sektoren des Ausgangs-Mobilfunkstandorts gemeinsam ausgewertet werden.

In einer möglichen Ausgestaltung des erfindungsgemäßen Verfahrens werden die bei den geplanten Nachbar-Mobilfunkstandorten identifizierten fehlenden und/oder unnötigen Nachbar-Mobilfunkstandorte bzw. die von diesen umfassten fehlenden und/oder unnötigen Funkzellen in einer Datenbank zunächst zumindest temporär hinterlegt. Von dort können sie abgerufen und insbesondere in Form von einer oder mehreren Listen auf einer Anzeigeeinheit, vorzugsweise einer graphischen Benutzeroberfläche zur manuellen Bearbeitung der Listen, angezeigt werden.

Es ist denkbar, die identifizierten fehlenden und/oder unnötigen Nachbar-Mobilfunkstandorte zunächst als Vorschlag zur Ergänzung bzw. zur Löschung anzuzeigen, wobei eine finale Entscheidung, welche Nachbar-Mobilfunkstandorte bzw. welche diesen jeweils zugeordneten Funkzellen tatsächlich ergänzt oder gelöscht werden, letztlich ggf. unter Hinzuziehung bzw. Berücksichtigung weiterer Daten und/oder Parameter getroffen wird.

In der Regel wird das Verfahren für jede Mobilfunktechnik gesondert ausgeführt. Es ist jedoch auch denkbar, das Verfahren für mehrere Mobilfunktechniken gemeinsam auszuführen.

Es ist weiterhin denkbar, dass pro Sektor bzw. davon definierter Funkzelle des Ausgangs-Mobilfunkstandorts fehlende und/oder unnötige Funkzellen bzw. damit assoziierte Sektoren von Nachbar-Mobilfunkstandorten identifiziert und angezeigt werden. Das heißt, dass für den Ausgangs-Mobilfunkstandort die fehlenden und/oder unnötigen Nachbar-Mobilfunkstandorte dediziert für die jeweiligen mit dem Ausgangs-Mobilfunkstandort assoziierten Sektoren aufgeschlüsselt betrachtet werden. Das bedeutet weiter, dass bei dem erfindungsgemäßen Verfahren für den Ausgangs-Mobilfunkstandort jeder Sektor separat und in Bezug zu jedem Sektor der Nachbar-Mobilfunkstandorte separat betrachtet wird.

Als HO-Messdaten werden jeweilige Verbindungsübergaben, auch als Handover bezeichnet, von dem Ausgangs-Mobilfunkstandort zu jeweiligen Nachbar-Mobilfunkstandorten, insbesondere als jeweilige Absolut- bzw. Stückzahl pro Tag rechnergestützt erfasst und gezählt. Wie voranstehend erläutert, ist es dabei in weiterer Ausgestaltung des erfindungsgemäßen Verfahrens möglich, dass die jeweiligen Verbindungsübergaben bzw. Handover von einer jeweiligen durch einen jeweiligen Sektor des Ausgangs-Mobilfunkstandorts definierten Funkzelle zu jeweiligen durch die jeweiligen Sektoren der jeweiligen Nachbar-Mobilfunkstandorte definierten Funkzellen ausgewertet werden. Das bedeutet, dass alle Verbindungsübergaben pro Funkzelle des Ausgangs-Mobilfunkstandorts zu einer jeweiligen Funkzelle eines jeweiligen Nachbar-Mobilfunkstandorts betrachtet werden. Somit ergibt sich eine sehr aufgeschlüsselte Betrachtung der dem Ausgangs-Mobilfunkstandort zugeordneten Funkzellen und deren Verbindungen zu jeweiligen Funkzellen eines jeweiligen Nachbar-Mobilfunkstandorts.

Gezählt werden die Handover-Anzahlen in der Regel von einem Verkehrsmesssystem in einer Handover-Messung. In Ausgestaltung des erfindungsgemäßen Verfahrens werden diese Handover-Anzahlen pro Nachbar-Mobilfunkstandort und weiter pro Funkzelle des Nachbar-Mobilfunkstandorts zur Anzeige gebracht und zur Entscheidung, inwieweit der betroffene Nachbar-Mobilfunkstandort als geplanter Nachbar-Mobilfunkstandort verbleibt oder gelöscht wird bzw. inwieweit eine oder mehrere dessen Funkzellen verbleiben oder gelöscht werden, herangezogen.

In weiterer Ausgestaltung des erfindungsgemäßen Verfahrens wird für jeden Nachbar-Mobilfunkstandort der Wichtungswert, wie die jeweilige mindestens eine Antenne zu der mindestens eine Antenne des mindestens einen Ausgangs-Mobilfunkstandort ausgerichtet ist, auf Basis der relativen geometrischen Lage des Ausgangs-Mobilfunkstandorts und des jeweiligen Nachbar-Mobilfunkstandorts zueinander und deren jeweiligen Hauptstrahlrichtungen berechnet und als ganzzahliger Wert in einem Wertebereich von bspw. 0 bis 360 angegeben. Das bedeutet, dass für jedes Paar gebildet aus einem jeweiligen Sektor des Ausgangs-Mobilfunkstandorts und einem Sektor eines jeweiligen Nachbar-Mobilfunkstandorts ein jeweiliger Wichtungswert zu berechnen ist. Dabei ist, wie voranstehend erläutert, jedem Sektor eine Antenne zugeordnet, die in eine Hauptstrahlrichtung strahlt. Somit ergeben sich zur Berechnung eines jeweiligen Wichtungswerts immer jeweilige Paare von Antennen und diesen zugeordneten geographischen bzw. geometrischen Koordinaten, die identisch sind zu den Koordinaten des Ausgangs-Mobilfunkstandorts bzw. des jeweiligen Nachbar-Mobilfunkstandorts.

In weiterer Ausgestaltung werden zur Bestimmung eines jeweiligen Wichtungswerts bzw. des mindestens einen Wichtungswerts die Hauptstrahlrichtung der mindestens einen Antenne des Ausgangs-Mobilfunkstandorts, die jeweilige Hauptstrahlrichtung der jeweiligen mindestens einen Antenne eines jeweiligen Nachbar-Mobilfunkstandorts, eine geometrische Richtung vom Ausgangs-Mobilfunkstandort zum jeweiligen Nachbar-Mobilfunkstandort und eine geometrische Richtung vom jeweiligen Nachbar-Mobilfunkstandort zum Ausgangs-Mobilfunkstandort bestimmt und in Winkelgrad angegeben. Dabei entspricht 0° einer nördlichen, 120° einer südöstlichen und 240° einer südwestlichen Himmelsrichtung. Der mindeste eine Wichtungswert wird jeweils mit Hilfe von verschachtelten, die bestimmten Hauptstrahlrichtungen und geometrischen Richtungen miteinander korrelierenden Wenn-Funktionen (IF-Funktionen) berechnet. Wie voranstehend erwähnt, werden in Abhängigkeit einer Anzahl von zu betrachtenden Sektoren und/oder Mobilfunk-Techniken pro Ausgangs-Mobilfunkstandort und jeweiligem Nachbar-Mobilfunkstandort entsprechend mehrere Wichtungswerte berechnet.

Vorzugsweise wird der jeweilige Wichtungswert gemäß folgender Formel berechnet:

W = Int(Wenn([W1] Ist Nicht Null;Wenn([W2] Ist Nicht Null;[W1]+[W2];" ");" ")),

wobei W den Wichtungswert, Int (x) die Ganzzahlfunktion und Wenn(x) die Wenn-Funktion bezeichnet und:

W1=Wenn([B1]>=[D1];(Wenn((180-[B1]+[D1])>0;180-[B1]+[D1];180-(360-[B1]+[D1])));(Wenn((180-[D1]+[B1])>0;180-[D1]+[B1];[D1]-180-[B1])))

W2=Wenn([A1]>=[C1];(Wenn((180-[A1]+[C1])
>0;180-[A1]+[C1];180-(360-[A1]+[C1])));(Wenn
((180-[C1]+[A1])>0;180-[C1]+[A1];-[A1]+[C1]-
180))),

wobei

A1 die Hauptstrahlrichtung der mindestens einen Antenne des Ausgangs-Mobilfunkstandorts,

B1 die jeweilige Hauptstrahlrichtung der jeweiligen mindestens einen Antenne des jeweiligen Nachbar-Mobilfunkstandorts,

C1 die Richtung vom Ausgangs-Mobilfunkstandort zum jeweiligen Nachbar-Mobilfunkstandort, und

D1 die Richtung vom jeweiligen Nachbar-Mobilfunkstandort zum Ausgangs-Mobilfunkstandort ist.

In weiterer Ausgestaltung werden die jeweilige Hauptstrahlrichtung der mindestens einen Antenne des Ausgangs-Mobilfunkstandorts, die jeweilige Hauptstrahlrichtung der mindestens einen Antenne eines jeweiligen Nachbar-Mobilfunkstandorts, die Richtung vom Ausgangs-Mobilfunkstandorts zu einem jeweiligen Nachbar-Mobilfunkstandort und die Richtung vom jeweiligen Nachbar-Mobilfunkstandort zum Ausgangs-Mobilfunkstandort wie folgt bestimmt:

A1: Wenn([AA] Nicht Wie "Halle*";Wenn([AA] Nicht Wie "DV0*";Peg_all_gsm.AZI;[C1]);[C1])
B1: Wenn([AA_1] Wie "DV0*" Oder [AA_1] Wie "Halle";Wenn([C1]<180;[C1]+180;[C1]-180);[AZI_1])
C1:
Int(Wenn([la]*[ba]>0;Wenn([la]>0;[Ca];180+[Ca]);
Wenn([la]<0;360+[Ca];180+ [Ca])))
D1: Wenn(([C1]+180)<360;[C1]+180;[C1]-180)
Ca: 180*(ArcTan([la]/[ba]))/3,1415
la:           -(3600*Teil([Länge];1;2)+60*Teil([Länge];3;2)+Teil([Länge];5;2)-3600*Links([Länge_1];2)-60*Teil([Länge_1];3;2)-Teil([Länge_1];5;2))/51,1+0,0000001
ba:          -(3600*Teil([Breite];1;2)+60*Teil([Breite];3;2)+Teil([Breite];5;2)-3600*Links([Breite_1];2)-60*Teil([Breite_1];3;2)-Teil([Breite_1];5;2))/32,01+0,0000001,
wobei
A1 die Hauptstrahlrichtung der mindestens einen Antenne des Ausgangs-Mobilfunkstandorts,
B1 die jeweilige Hauptstrahlrichtung der jeweiligen mindestens einen Antenne des jeweiligen Nachbar-Mobilfunkstandorts,
C1 die Richtung vom Ausgangs-Mobilfunkstandort zum jeweiligen Nachbar-Mobilfunkstandort, und
D1 die Richtung vom jeweiligen Nachbar-Mobilfunkstandort zum Ausgangs-Mobilfunkstandort,
DV0* einen Rundstrahler, Halle* eine Indoor-Antenne, AZI die Hauptstrahlrichtung und AA die Antennenart bezeichnet, und die Endung "_1" einen jeweiligen Wert des jeweiligen Nachbar-Mobilfunkstandorts kennzeichnet.

Bei der Ermittlung der Hauptstrahlrichtung der mindestens einen Antenne des Ausgangs-Mobilfunkstandorts und der jeweiligen Hauptstrahlrichtung der mindestens einen Antenne des jeweiligen Nachbar-Mobilfunkstandorts werden die seltenen Typen Rundstrahler (DVO*) und Indoor-Antennen (Halle*) gesondert behandelt. Ein Rundstrahler bezeichnet dabei eine Antenne, die eine nach allen Richtungen in der horizontalen Ebene gleichförmige Abstrahlcharakteristik hat. Die Berechnung des Wichtungswerts W ist abhängig davon, in welchem Quadranten sich der betrachtete Nachbar-Mobilfunkstandort befindet, wenn der Ausgangs-Mobilfunkstandort die Mitte eines entsprechenden Diagramms bzw. Koordinatensystems darstellt. Diese Lageabhängigkeit wird in den voranstehend beschriebenen und gezeigten verschachtelten Wenn-Funktionen (if-Funktionen) berücksichtigt.

Links (Zeichenkette; AnzahlZeichen) ist eine Funktion, die die ersten Zeichen der Zeichenkette beginnend links der Zeichenkette, d. h. mit dem ersten Zeichen angibt und zwar so viele, wie in AnzahlZeichen angegeben. Mit diesen aus der Zeichenkette "herausgeschnittenen" Zeichen können dann weitere Berechnungen durchgeführt werden. Entsprechend ist Teil (Zeichenkette; Start; AnzahlZeichen) eine Funktion, die startend von dem angegebenen Start aus der Zeichenkette von links so viele Zeichen angibt, die in AnzahlZeichen angegeben sind. Wird bspw. als Zeichenkette das Format Grad : Minuten : Sekunden, bspw. 15 : 45 : 33 verwendet, ist es denkbar, dass bei Anwendung der Funktion "Teil" aus dieser Zeichenkette das Zeichen "15" herausgeschnitten wird und "15" dann zu weiteren Berechnungen verwendet wird, bspw. für eine Umrechnung von Grad in Sekunden.

[Breite] bzw. [Breite_1] gibt den jeweiligen geographischen Breitengrad des jeweiligen Mobilfunkstandorts, d. h. des Ausgangs-Mobilfunkstandorts bzw. des Nachbar-Mobilfunkstandorts an. Entsprechend gibt [Länge] bzw. [Länge_1] den jeweiligen geographischen Längengrad des jeweiligen Mobilfunkstandorts, d. h. des Ausgangs-Mobilfunkstandorts bzw. des Nachbar-Mobilfunkstandorts an. Beide zusammen geben jeweils die geographischen Koordinaten des jeweiligen Mobilfunk-Standorts, d. h. des Ausgangs- bzw. des Nachbar-Mobilfunkstandorts an.

Neben dem Wichtungswert W wird in weiterer Ausgestaltung die relative Entfernung für jeden Nachbar-Mobilfunkstandort zum Ausgangs-Mobilfunkstandort als die Entfernung des Nachbar-Mobilfunkstandort im Verhältnis zur durchschnittlichen Entfernung der geplanten Nachbar-Mobilfunkstandorte zum Ausgangs-Mobilfunkstandort berechnet. Die Berechnung der relativen Entfernung ist notwendig, weil das Mobilfunknetz unterschiedlich dicht aufgebaut ist. Ist die Entfernung zu einem jeweiligen Nachbar-Mobilfunkstandort genauso groß wie die durchschnittliche Entfernung aller geplanten Nachbar-Mobilfunkstandorte, ist der Wert der relativen Entfernung 1. Ist die Entfernung, d. h. die absolute Entfernung ausgehend von dem Ausgangs-Mobilfunkstandort zu dem betrachteten Nachbar-Mobilfunkstandort kleiner als die durchschnittliche Entfernung aller geplanten Nachbar-Mobilfunkstandorte zum Ausgangs-Mobilfunkstandort, ist der Wert kleiner 1. Ist die Entfernung, d. h. die absolute Entfernung ausgehend von dem Ausgangs-Mobilfunkstandort zu dem betrachteten Nachbar-Mobilfunkstandort größer als die durchschnittliche Entfernung aller geplanten Nachbar-Mobilfunkstandorte zum Ausgangs-Mobilfunkstandort, ist der Wert größer 1. Die Berechnung dieser beiden Werte, d. h. die Berechnung des Wichtungswerts W und die Berechnung der relativen Entfernung findet für jede Nachbarschaft innerhalb des Mobilfunknetzes statt. Dabei bedeutet eine Nachbarschaft jede Kombination von den zueinander geometrisch benachbarten in dem Mobilfunknetz definierten Funkzellen bzw. damit assoziierten bzw. diese definierenden Mobilfunkstandorten. Das bedeutet wiederum, dass jeder Mobilfunkstandort innerhalb des Mobilfunknetzes einmal als Ausgangs-Mobilfunkstandorts entsprechend mit seiner bzw. seinen assoziierten Ausgangs-Funkzelle(n) und entsprechend der Anzahl der Nachbar-Mobilfunkstandorte dieses jeweiligen Mobilfunkstandorts mehrere Male als Nachbar-Mobilfunkstandort mit seinen assoziierten Funkzelle(n) als Nachbar-Funkzelle(n) behandelt wird.

Das erfindungsgemäße Verfahren wird für jede Mobilfunktechnik, insbesondere für GSM, UMTS und LTE gesondert oder für mehrere Mobilfunktechniken gemeinsam durchgeführt.

Die geplanten Nachbar-Mobilfunkstandorte werden durch einen oder mehrere potentielle Nachbar-Mobilfunkstandorte bzw. durch eine oder mehrere von deren Funkzellen ergänzt, wenn für den einen oder die mehreren Nachbar-Mobilfunkstandorte bzw. von deren Funkzellen jeweils eine der folgenden vorgegebenen Bedingungen erfüllt ist:

$$V \le 0,1,$$

$$0,1 < V <= 0,45 \text{ und } W > 222,$$

oder

$$0,45 < V <= 1 \text{ und } W > 280,$$

oder

$$1 < V < 1,4 \text{ und } W > 330,$$

oder

$$W > 279 \text{ und } W / V > 361,$$

wobei V die jeweilige relative Entfernung und W den jeweiligen Wichtungswert des einen oder der mehreren potentiellen Nachbar-Mobilfunkstandorte bzw. deren Funkzellen bezeichnet.

In der Regel wird dabei, wie voranstehend ausführlich erläutert, jeder Sektor der jeweiligen potentiellen Nachbar-Mobilfunkstandorte in Bezug zu den jeweiligen Sektoren des Ausgangs-Mobilfunkstandorts gesondert betrachtet. Dies bedeutet wiederum, dass der zu ergänzende Nachbar-Mobilfunkstandort danach ausgewählt wird, ob zumindest einer der ihm zugeordneten Sektoren in Bezug zu mindestens einem der mit dem Ausgangs-Mobilfunkstandort assoziierten Sektoren eine der oben genannten vorgegebenen Bedingungen erfüllt. Es handelt sich bei den voranstehenden Bedingungen um fünf Kategorien nach dem Prinzip, je weiter die potentiellen Nachbar-Mobilfunkstandorte von dem Ausgangs-Mobilfunkstandort entfernt sind, umso deutlicher müssen sich die jeweiligen Antennen anschauen bzw. zueinander ausgerichtet sein, um daraus einen Vorschlag zur Ergänzung von Nachbar-Mobilfunkstandorten zu generieren. Wenn V als die relative Entfernung des Ausgangs-Mobilfunkstandorts zum jeweiligen betrachtenden potentiellen Nachbar-Mobilfunkstandort kleiner oder gleich 0,1 ist, so wird dieser potentielle Nachbar-Mobilfunkstandort in die Kategorie "dicht" eingeordnet. Ist die relative Entfernung größer 0,1, aber kleiner oder gleich 0,45 und der Wichtungswert größer 222, so wird der Nachbar-Mobilfunkstandort der Kategorie "mittel" zugeordnet. Ist die relative Entfernung größer 0,45, aber kleiner oder gleich 1 und der Wichtungswert größer 280, so wird der jeweilige potentielle Nachbar-Mobilfunkstandort der Kategorie "weit" zugeordnet und ist die relative Entfernung größer 1, aber kleiner 1,4 und der Wichtungswert größer 330, wird der potentielle Nachbar-Mobilfunkstandort der Kategorie "weiter" zugeordnet. Im Falle, dass der Wichtungswert größer 279 und der Quotient W/V > 361 ist, wird der entsprechende Nachbar-Mobilfunkstandort der Kategorie "Quotient" zugeordnet.

Bei den geplanten Nachbar-Mobilfunkstandorten werden ein oder mehrere geplante Nachbar-Mobilfunkstandorte bzw. eine oder mehrere jeweils damit assoziierte Funkzellen gelöscht, wenn für den einen oder die mehreren geplanten Nachbar-Mobilfunkstandorte bzw. eine oder mehrere der ihnen zugeordneten Funkzellen jeweils die folgende Bedingung erfüllt ist:

$$V < 1,5 \text{ und } W < 150,$$

wobei

V die jeweilige relative Entfernung und W den jeweiligen Wichtungswert des einen oder der mehreren geplanten Nachbar-Mobilfunkstandorte bzw. der davon umfassten Funkzellen bezeichnet.

Durch eine Änderung dieser voranstehend genannten und beispielhaft bezeichneten Bedingungen kann eine Anzahl von Vorschlägen beeinflusst werden.

In weiterer Ausgestaltung des erfindungsgemäßen Verfahrens wird eine Anzeige der unnötigen bzw. zu löschenden geplanten Nachbar-Mobilfunkstandorte bzw. der unnötigen bzw. zu löschenden Funkzellen der geplanten Nachbar-Mobilfunkstandorte mit einem oder mehreren vordefinierten Filtern, insbesondere unter Berücksichtigung der jeweiligen Handover-Anzahl zwischen den jeweiligen zu löschenden geplanten Nachbar-Mobilfunkstandorten bzw. deren jeweiligen Funkzellen und des Ausgangs-Mobilfunkstandorts bzw. dessen Funkzellen gefiltert. Das bedeutet, dass im Fall, dass ein Standort bzw. zumindest eine damit assoziierte Funkzelle als zu löschen vorgeschlagen wird, anhand der gemessenen Anzahl von Handover zu dem Ausgangs-Mobilfunkstandort verifiziert wird, wie wichtig dieser Nachbar-Mobilfunkstandort bzw. die zumindest eine damit assoziierte Funkzelle für den Ausgangs-Mobilfunkstandort tatsächlich ist und falls die Anzahl der Handover einen bestimmten Schwellwert überschreitet, die vorgeschlagene Löschung nicht akzeptiert und verworfen wird.

Ferner betrifft die vorliegende Erfindung ein Computerprogrammprodukt mit einem computerlesbaren Medium und einem auf dem computerlesbaren Medium gespeicherten Computerprogramm mit Programmcodemitteln, die dazu konfiguriert sind, bei Ablauf des Computerprogramms auf einer Recheneinheit ein voranstehend beschriebenes Verfahren auszuführen. D. h., wenn das Computerprogrammprodukt in eine Recheneinheit geladen und durch einen Prozessor der Recheneinheit ausgeführt wird, wird ein voranstehend beschriebenes Verfahren ausgeführt.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf die Zeichnungen schematisch und ausführlich beschrieben.

Figur 1 zeigt in schematischer Darstellung verschiedene Szenarien von benachbarten Mobilfunkstandorten und deren jeweiligen Hauptstrahlrichtungen.

Figur 2 zeigt in schematischer Darstellung einen Ausgangs-Mobilfunkstandort mit Nachbar-Mobilfunkstandorten, für welchen eine Ausführungsform des erfindungsgemäßen Verfahrens durchgeführt wird.

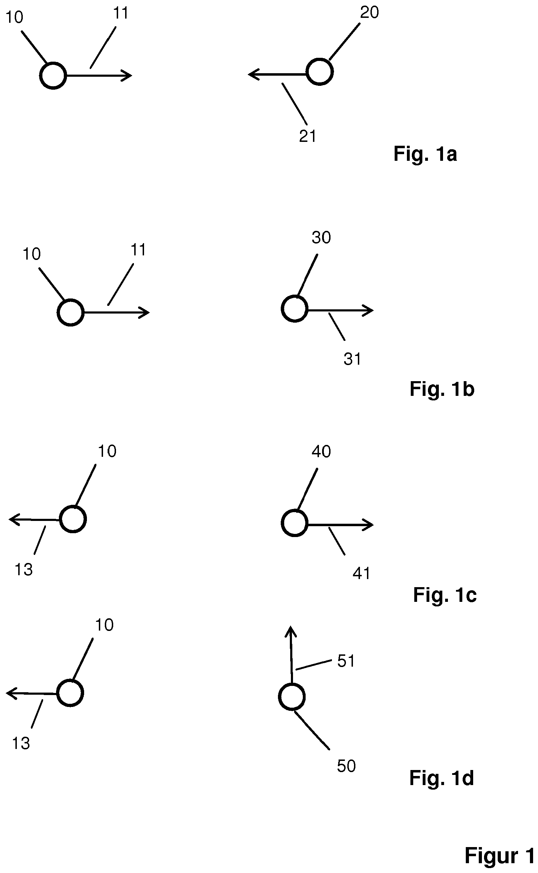

Figur 1a zeigt einen Ausgangs-Mobilfunkstandort 10 und einen Nachbar-Mobilfunkstandort 20. Der Ausgangs-Mobilfunkstandort 10 und der Nachbar-Mobilfunkstandort 20 stehen nebeneinander, insbesondere auf einem gleichen geographischen Breitengrad. Der Nachbar-Mobilfunkstandort steht östlich im Verhältnis zu dem Ausgangs-Mobilfunkstandort 10. Jeder der Mobilfunkstandorte umfasst drei Hauptstrahlrichtungen entsprechend drei Sektoren. Hier dargestellt ist jeweils nur einer der drei Sektoren, nämlich jeweils Sektor 1. Sektor 1 von dem Ausgangs-Mobilfunkstandort 10 hat eine Hauptstrahlrichtung 11 von 90°, was genau einer östlichen Himmelsrichtung entspricht und demnach genau in Richtung des Nachbar-Mobilfunkstandorts 20 zeigt. Sektor 1 des Nachbar-Mobilfunkstandorts 20 hat eine Hauptstrahlrichtung 21 von 270°, d. h. genau in westlicher Richtung und somit genau in Richtung des Ausgangs-Mobilfunkstandorts 10, d. h. die dem Sektor 1 des Ausgangs-Mobilfunkstandorts 10 zuzuordnende Antenne ist der dem Sektor 1 des Nachbar-Mobilfunkstandorts 20 zuzuordnenden Antenne zugewandt. Das wiederum bedeutet, dass die jeweiligen Sektoren 1 bzw. deren Antennen von Ausgangs-Mobilfunkstandort 10 und von Nachbar-Mobilfunkstandort 20 genau aufeinander zu strahlen. In diesem Fall ist der zu berechnende Wichtungswert W maximal, was einem Wert von 360 entspricht.

In Figur 1b sind ebenfalls wieder der Ausgangs-Mobilfunkstandort 10 und ein Nachbar-Mobilfunkstandort 30 gezeigt. Der Ausgangs-Mobilfunkstandort 10 und der Nachbar-Mobilfunkstandort 30 stehen nebeneinander, insbesondere auf einem gleichen geographischen Breitengrad. Der Nachbar-Mobilfunkstandort 30 steht östlich relativ zu dem Ausgangs-Mobilfunkstandort 10. Sektor 1 von Ausgangs-Mobilfunkstandort hat eine Antenne mit Hauptstrahlrichtung 11, d. h. in genau östlicher Richtung und demnach genau in Richtung zum Nachbar-Mobilfunkstandort 30. Sektor 1 vom Nachbar-Mobilfunkstandort 30 hat eine Antenne mit Hauptstrahlrichtung 31 von 90°, d. h. genau in östlicher Richtung und demnach genau entgegengesetzt und wegweisend von Ausgangs-Mobilfunkstandort 10. Das bedeutet, dass die Sektoren bzw. deren Antennen genau in die gleiche Richtung strahlen, wodurch sich ein Wichtungswert von 180 ergibt.

Figur 1c zeigt wiederum den Ausgangs-Mobilfunkstandort 10 und einen Nachbar-Mobilfunkstandort 40. Der Ausgangs-Mobilfunkstandort 10 und der Nachbar-Mobilfunkstandort 40 stehen nebeneinander, insbesondere auf einem gleichen geographischen Breitengrad. Der Nachbar-Mobilfunkstandort 40 steht östlich relativ zu dem Ausgangs-Mobilfunkstandort 10. Sektor 1 von dem Ausgangs-Mobilfunkstandort 10 hat eine Antenne mit Hauptstrahlrichtung 13 von 270°, d. h. genau in westliche Richtung und demnach genau weg von dem Nachbar-Mobilfunkstandort 40. Sektor 1 von dem Nachbar-Mobilfunkstandort 40 hat eine Antenne mit Hauptstrahlrichtung 41 von 90°, d. h. genau in östliche Richtung und demnach genau weg von dem Ausgangs-Mobilfunkstandort 10. Das bedeutet, dass die Sektoren bzw. deren Antennen genau voneinander weg strahlen und demnach der Wichtungswert minimal wird, was einem Wert von 0 entspricht.

Figur 1 d zeigt wiederum den Ausgangs-Mobilfunkstandort 10 und einen Nachbar-Mobilfunkstandort 50, die nebeneinander stehen, insbesondere auf einem gleichen geographischen Breitengrad. Nachbar-Mobilfunkstandort 50 steht östlich relativ zu dem Ausgangs-Mobilfunkstandort 10. Sektor 1 von Ausgangs-Mobilfunkstandort 10 hat eine Antenne mit Antennenstrahlrichtung bzw. Hauptstrahlrichtung 13 von 270°, d. h. genau westlich und demnach genau weg von dem Nachbar-Mobilfunkstandort 50. Sektor 1 von dem Nachbar-Mobilfunkstandort 50 hat eine Antenne mit Antennenstrahlrichtung bzw. Hauptstrahlrichtung 51 von 0°, d. h. genau nördlich, was bedeutet, dass die Hauptstrahlrichtungen von Sektor 1 des Ausgangs-Mobilfunkstandorts und des Sektors 1 des Nachbar-Mobilfunkstandorts senkrecht zueinander stehen, was einen Wichtungswert von 90 ergibt.

Generell liegt der Wichtungswert in einem Wertebereich von minimal 0 bis maximal 360. Alle Werte dazwischen sind möglich.

Aus jeweiligen Standortkoordinaten eines Ausgangs-Mobilfunkstandorts, geplanten Nachbar-Mobilfunkstandorten und potentiellen Nachbar-Mobilfunkstandorten zu dem Ausgangs-Mobilfunkstandort und deren jeweiligen Hauptstrahlrichtungen, werden erfindungsgemäß einige Parameter berechnet, mit deren Hilfe Vorschläge ermittelt werden, welche Nachbar-Mobilfunkstandorte zu den geplanten Nachbar-Mobilfunkstandorten hinzugefügt bzw. von diesen entfernt werden können. Dabei bezeichnen potentielle Nachbar-Mobilfunkstandorte alle außer den geplanten Nachbar-Mobilfunkstandorten vorhandenen Standorte der Umgebung des Ausgangs-Mobilfunkstandorts. Sie werden in der Regel aus den Nachbar-Mobilfunkstandorten zu den geplanten Nachbar-Mobilfunkstandorten ermittelt. Aus dem Abstand der geplanten Nachbar-Mobilfunkstandorte zu dem Ausgangs-Mobilfunkstandort wird eine durchschnittliche Entfernung der geplanten Nachbar-Mobilfunkstandorte ermittelt. Daraus und aus der Entfernung der jeweiligen Nachbar-Mobilfunkstandorte, insbesondere der jeweiligen potentiellen Nachbar-Mobilfunkstandorte ergibt sich dann eine relative Entfernung für jeden Nachbar-Mobilfunkstandort, insbesondere für jeden potentiellen Nachbar-Mobilfunkstandort. Eine derartige Berechnung erfolgt von jeder Zelle bzw. jedem Mobilfunkstandort als Ausgangs-Mobilfunkstandort aus zu allen geplanten Nachbar-Mobilfunkstandorten sowie zu allen potentiellen Nachbar-Mobilfunkstandorten. Aus einer Lage der Mobilfunkstandorte zueinander und deren jeweiligen Hauptstrahlrichtungen wird der genannte Wichtungswert bestimmt, der beschreibt, wie die jeweiligen den jeweiligen Mobilfunkstandorten zuzuordnenden und deren jeweiligen Hauptstrahlrichtungen definierenden Antennen zueinander stehen.

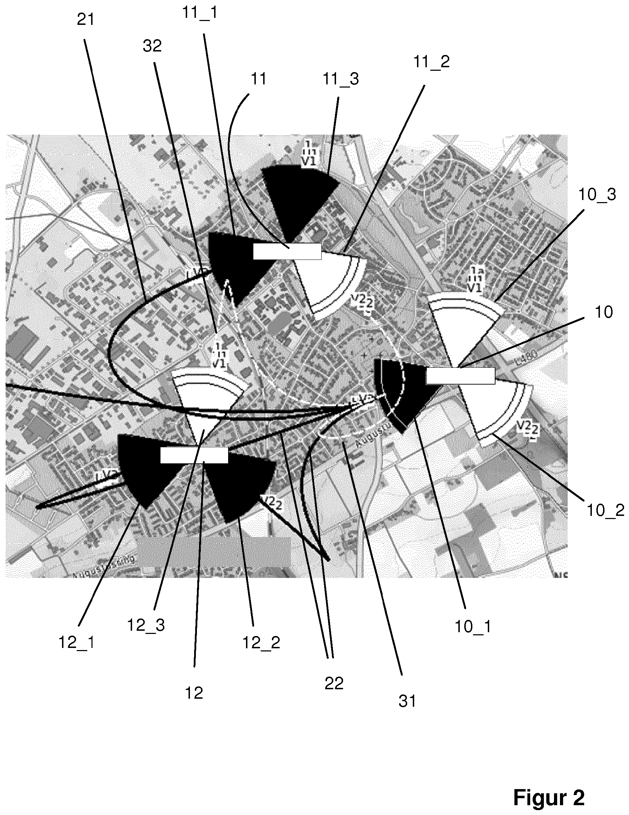

Figur 2 zeigt in schematischer Darstellung einen Ausschnitt einer geographischen Lage dreier Mobilfunkstandorte, wobei eine Ausführungsform des erfindungsgemäßen Verfahrens anhand eines Mobilfunkstandorts als Ausgangs-Mobilfunkstandort 10 beschrieben wird. Neben dem Ausgangs-Mobilfunkstandort 10 sind hier zwei Nachbar-Mobilfunkstandorte 11 und 12 dargestellt. Der Ausgangs-Mobilfunkstandort 10 umfasst drei Sektoren, 10_1, 10_2 und 10_3. Jedem der Sektoren 10_1, 10_2 und 10_3 ist jeweils eine Antenne, eine sog. Sektorantenne, zugeordnet. Demnach hat jeder Sektor 10_1, 10_2 und 10_3 genau eine Hauptstrahlrichtung. Die geographischen Koordinaten des Ausgangs-Mobilfunkstandorts 10 gelten auch für die bzw. sind auch den dem Ausgangs-Mobilfunkstandort 10 zugeordneten Sektoren 10_1, 10_2 und 10_3 zugeordnet. Betrachtet wird nun im Folgenden der erste Sektor 10_1 bezüglich der für diesen Sektor 10_1 geplanten Nachbar-Mobilfunkstandorte bzw. deren entsprechend zugeordneten Sektoren. Bei Durchführung des erfindungsgemäßen Verfahrens wird in der Regel jeder Sektor 10_1, 10_2 und 10_3 des Ausgangs-Mobilfunkstandorts 10 zur Planung von Nachbar-Sektoren/- Funkzellen bzw. diesen jeweils zugeordneten Nachbar-Mobilfunkstandorten gesondert betrachtet. Das bedeutet, dass jeder Sektor des Ausgangs-Mobilfunkstandorts 10 im Verhältnis zu jedem Sektor der Nachbar-Mobilfunkstandorte 11, 12 des Ausgangs-Mobilfunkstandorts 10 betrachtet wird.

Im Folgenden wird der Übersichtlichkeit halber lediglich der Sektor 10_1 des Ausgangs-Mobilfunkstandorts 10 betrachtet. Als Nachbar-Mobilfunkstandorte zu dem Ausgangs-Mobilfunkstandort 10 sind hier der Einfachheit halber lediglich zwei Nachbar-Mobilfunkstandorte gezeigt, nämlich der Nachbar-Mobilfunkstandort 11 und der Nachbar-Mobilfunkstandort 12. Der Nachbar-Mobilfunkstandort 11 umfasst entsprechend ebenfalls drei Sektoren 11_1, 11_2 und 11_3. Der Nachbar-Mobilfunkstandort 12 umfasst ebenfalls drei Sektoren, nämlich Sektor 12_1, Sektor 12_2 und Sektor 12_3. Jeder Sektor ist hier als Kreisausschnitt eines Kreises dargestellt, dessen jeweiliges Zentrum durch die jeweiligen Koordinaten des jeweiligen Mobilfunkstandorts gegeben ist. Betrachtet man nun Sektor 10_1 des Ausgangs-Mobilfunkstandorts 10, dessen geographische Koordinaten durch den Mittelpunkt des die Kreisabschnitte der Sektoren 10_1, 10_2, 10_3 bildenden Kreises gegeben sind, so ist festzustellen, dass es bereits geplante Nachbarschaften, d. h. geplante Sektoren der gezeigten Nachbar-Mobilfunkstandorte 11 und 12 gibt, die dadurch gekennzeichnet sind, dass sie jeweils mittels einer durchgezogenen Linie mit dem Sektor 10_1 des Ausgangs-Mobilfunkstandorts 10 verbunden sind. Demnach stellen die Sektoren 12_1 und 12_2 des Nachbar-Mobilfunkstandorts 12 geplante Nachbar-Sektoren des Nachbar-Mobilfunkstandorts 12 zu dem Sektor 10_1 des Ausgangs-Mobilfunkstandorts 10 dar. Der Sektor 12_1 des geplanten Nachbar-Mobilfunkstandorts 12 ist mit Sektor 10_1 des Ausgangs-Mobilfunkstandorts 10 durch eine Linie 22 verbunden. Der Sektor 12_2 des Nachbar-Mobilfunkstandorts 12 ist ebenfalls über eine Verbindung 22 mit dem Sektor 10_1 des Ausgangs-Mobilfunkstandorts 10 verbunden. Der Sektor 11_1 des Nachbar-Mobilfunkstandorts 11 ist ebenfalls bereits als geplanter Nachbar-Sektor zu dem Ausgangs-Sektor 10_1 des Ausgangs-Mobilfunkstandorts 10 vorgesehen und ist demnach über eine durchgezogene Linie 21 mit dem Sektor 10_1 des Ausgangs-Mobilfunkstandorts 10 verbunden. Anhand der geographischen Koordinaten des Ausgangs-Mobilfunkstandorts 10 und der Nachbar-Mobilfunkstandorte 11 und 12 kann nun eine jeweilige absolute Entfernung der jeweiligen Nachbar-Mobilfunkstandorte 11 und 12 zu dem Ausgangs-Mobilfunkstandort 10 ermittelt werden. Anhand der jeweiligen absoluten Entfernungen der Nachbar-Mobilfunkstandorte 11 und 12 zu dem Ausgangs-Mobilfunkstandort 10 kann eine durchschnittliche Entfernung der geplanten Nachbar-Mobilfunkstandorte zu dem Ausgangs-Mobilfunkstandort 10 ermittelt werden. Anhand der durchschnittlichen Entfernung der geplanten Nachbar-Mobilfunkstandorte 11 und 12 zu dem Ausgangs-Mobilfunkstandort 10 kann nun für jeden weiteren Nachbar-Mobilfunkstandort anhand dessen jeweiliger absoluter Entfernung zu dem Ausgangs-Mobilfunkstandort 10 eine relative Entfernung zu dem Ausgangs-Mobilfunkstandort 10 ermittelt werden. Ferner wird anhand der jeweiligen Sektorantennen und deren Strahlcharakteristik, bzw. deren jeweiligen Hauptstrahlrichtung sowie den geometrischen Richtungen der jeweiligen Nachbar-Mobilfunkstandorte 11, 12 zu dem Ausgangs-Mobilfunkstandort 10 für jeden Sektor 11_1, 11_2, 11_3 des Nachbar-Mobilfunkstandorts 11 bzw. 12_1, 12_2, 12_3 des Nachbar-Mobilfunkstandorts 12 ein jeweiliger Wichtungswert W bestimmt. Der Wichtungswert W gibt an, wie die jeweilige Sektorantenne eines jeweiligen Sektors eines jeweiligen Nachbar-Mobilfunkstandorts 11, 12 zu der Sektorantenne des Sektors 10_1 des Ausgangs-Mobilfunkstandorts 10 ausgerichtet ist. Der Wichtungsfaktor W wird bspw. bei Betrachtung des Sektors 10_1 des Ausgangs-Mobilfunkstandorts 10 für jede paarweise Kombination des Sektors 10_1 mit jedem der Sektoren der Nachbar-Mobilfunkstandorte, bspw. mit den jeweiligen Sektoren 11_1, 11_2, 11_3 des Nachbar-Mobilfunkstandorts 11 und der jeweiligen Sektoren 12_1, 12_2, 12_3 des Nachbar-Mobilfunkstandorts 12 berechnet. Demnach gibt es bei bloßer Betrachtung des Sektors 10_1 des Ausgangs-Mobilfunkstandorts 10 und der hier beispielhaft gezeigten Nachbar-Mobilfunkstandorte 11 und 12 insgesamt sechs Wichtungswerte, nämlich je einen Wichtungswert für die Kombinationen {10_1, 11_1}, {10_1, 11_2},{10_1, 11_3}, {10_1, 12_1}, {10_1, 12_2}, {10_1, 12_3}. Anhand der jeweiligen Wichtungswerte, die den jeweiligen Sektoren der Nachbar-Mobilfunkstandorte 11, 12 zuzuordnen sind, und anhand der jeweiligen relativen Entfernung V, wobei die jeweiligen relativen Entfernungen der jeweiligen Sektoren den relativen Entfernungen der jeweiligen Nachbar-Mobilfunkstandorte 11, 12 zu dem Ausgangs-Mobilfunkstandort 10 entsprechen, können pro paarweiser Kombination der Sektoren zu Sektor 10_1 zu erfüllende Bedingungen geprüft werden. Bei Erfüllen der vorgegebenen Bedingungen werden die jeweiligen Nachbar-Sektoren bzw. die diese umfassenden Nachbar-Mobilfunkstandorte entweder zu den geplanten Nachbar-Mobilfunkstandorten bzw. entsprechend zu den geplanten Nachbar-Sektoren hinzugerechnet bzw. es wird vorgeschlagen, diese hinzuzurechnen, oder aus der Liste der geplanten Nachbar-Mobilfunkstandorte bzw. der geplanten Nachbar-Sektoren gestrichen bzw. es wird vorgeschlagen, diese zu streichen. Die beispielhaft zu erfüllenden Bedingungen können wie folgt aussehen:

Wenn für einen oder für mehrere der Sektoren der Nachbar-Mobilfunkstandorte 11, 12 jeweils eine der folgenden Bedingungen erfüllt ist, so werden dieser eine oder diese mehreren Sektoren zu den geplanten Nachbar-Sektoren entsprechend der geplanten Nachbar-Mobilfunkstandorte hinzugerechnet bzw. so wird vorgeschlagen, diese Sektoren zu den geplanten Nachbar-Sektoren hinzuzurechnen.

$$V \leq 0,1,$$

$$0,1 < V \leq 0,45 \text{ und } W > 222,$$

oder

$$0,45 < V \leq 1 \text{ und } W > 280,$$

oder

$$1 < V < 1,4 \text{ und } W > 330,$$

oder

$$W > 279 \text{ und } W : V > 361.$$

Im Umkehrfall gilt für einen oder mehrere Sektoren der geplanten Nachbar-Mobilfunkstandorte 11, 12 jeweils die folgende Bedingung:

$V > 1,5$ und $W < 150$, so werden die entsprechenden Sektoren des jeweiligen geplanten Nachbar-Mobilfunkstandorts aus der Liste der geplanten Sektoren des entsprechend geplanten Nachbar-Mobilfunkstandorts gestrichen bzw. es wird vorgeschlagen, diese zu streichen. Erfüllen alle Sektoren eines geplanten Nachbar-Mobilfunkstandorts die voranstehende Bedingung, so wird der geplante Nachbar-Mobilfunkstandort vollständig gestrichen.

Da diese Bedingungen auf reiner geometrischer Betrachtung der jeweiligen Sektoren und deren Antennen zu dem Ausgangssektor bzw. Ausgans-Mobilfunkstandort 10 und dessen Antenne basieren, ist in der Praxis zu beachten, dass ggf., auch wenn eine der voranstehend genannten Bedingungen für einen jeweiligen Sektor erfüllt ist, sei es dass der jeweilige Sektor als Nachbar-Sektor zu dem Sektor 10_1 des Ausgangs-Mobilfunkstandorts 10 hinzugezählt oder dass der jeweilige Sektor von den geplanten Nachbar-Sektoren zu dem Ausgangssektor 10_1 des Ausgangs-Mobilfunkstandorts 10 gelöscht wird, auch andere praxisrelevante Parameter, wie bspw. in Bezug zum Löschen von geplanten Nachbar-Sektoren eine Anzahl von Verbindungsübergaben zwischen dem Ausgangssektor 10_1 des Ausgangs-Mobilfunkstandorts 10 zu dem jeweiligen Sektor des Nachbar-Mobilfunkstandorts 11, 12, zu betrachten sind, so dass, bspw. bei einer hohen Anzahl von in der Praxis auftretenden Verbindungsübergaben zwischen diesen Sektoren trotz der Tatsache, dass dieser jeweilige Sektor aus den geplanten Nachbar-Sektoren zu dem Ausgangs-Sektor 10_1 gestrichen werden sollte, nicht gestrichen wird, da in der Praxis zu viele Verbindungsübergaben zwischen den jeweiligen Sektoren stattfinden.

Im vorliegenden Fall werden zu den bereits existierenden geplanten Nachbar-Sektoren der jeweiligen Nachbar-Mobilfunkstandorte 11, 12, nämlich zu den bereits geplanten Nachbar-Sektoren 12_1 und 12_2 des Nachbar-Mobilfunkstandorts 12 und des Sektors 11_1 des Nachbar-Mobilfunkstandorts 11 als weitere Nachbar-Sektoren die Sektoren 12_3 des Nachbar-Mobilfunkstandorts 12 und der Sektor 11_2 des Nachbar-Mobilfunkstandorts 11 zu den geplanten Nachbar-Sektoren des Ausgangs-Sektors 10_1 des Ausgans-Mobilfunkstandorts 10 hinzugerechnet. Die nun neu zu den geplanten Nachbar-Sektoren der geplanten Nachbar-Mobilfunkstandorte 11, 12 zu dem Ausgangs-Sektor 10_1 des Ausgangs-Mobilfunkstandorts 10 hinzuzurechnenden Sektoren 11_2 bzw. 12_3 sind hier jeweils durch gestrichelte Linien 31 bzw. 32 mit dem Ausgangs-Sektor 10_1 des Ausgangs-Mobilfunkstandorts 10 verbunden.

Anhand, wie voranstehend erwähnt, zusätzlich zu ermittelnder Handover-Anzahlen der bereits geplanten Sektoren 12_1, 12_2 bzw. 11_1 zu dem Ausgangs-Sektor 10_1 kann letztlich entschieden werden, ob die Sektoren 12_1, 12_2 bzw. 11_1 tatsächlich in der Liste der Nachbar-Sektoren der jeweiligen geplanten Nachbar-Mobilfunkstandorte 11, 12 zu dem Ausgangs-Sektor 10_1 des Ausgangs-Mobilfunkstandorts 10 beibehalten werden sollen oder nicht. Anhand der letztlich in der Liste der geplanten Nachbar-Mobilfunkstandorte bzw. der geplanten Nachbar-Sektoren vorliegenden Nachbar-Mobilfunkstandorte bzw. deren jeweiligen Sektoren, die jeweils dediziert in Kombination mit den jeweiligen Sektoren des Ausgangs-Mobilfunkstandorts 10 betrachtet werden, werden letztlich Frequenzen und Codes den jeweiligen Sektoren bzw. den davon gebildeten Funkzellen der jeweiligen Nachbar-Mobilfunkstandorte 11, 12 zugewiesen.

## Patentansprüche

1. Computer-implementiertes Verfahren zur geometrischen Planung von Nachbar-Mobilfunkstandorten (11, 12, 20, 30, 40, 50) zu einem Ausgangs-Mobilfunkstandort (10) in einem Mobilfunknetz,

wobei der Ausgangs-Mobilfunkstandort (10) und jeder Nachbar-Mobilfunkstandort (11, 12, 20, 30, 40, 50) je mindestens eine Mobilfunkantenne mit einer Hauptstrahlrichtung aufweisen, bei dem geographische Koordinaten des Ausgangs-Mobilfunkstandorts (10), von geplanten Nachbar-Mobilfunkstandorten (11, 12, 20, 30, 40, 50) und von potentiellen Nachbar-Mobilfunkstandorten (11, 12, 20, 30, 40, 50) bestimmt und auf Basis der geographischen Koordinaten des Ausgangs-Mobilfunkstandorts (10), der geplanten Nachbar-Mobilfunkstandorten (11, 12, 20, 30, 40, 50) und der potentiellen Nachbar-Mobilfunkstandorten (11, 12, 20, 30, 40, 50), und deren jeweiligen Hauptstrahlrichtungen als Parameter mindestens eine durchschnittliche Entfernung der geplanten Nachbar-Mobilfunkstandorte (11, 12, 20, 30, 40, 50) zum Ausgangs-Mobilfunkstandort (10), eine relative Entfernung für jeden Nachbar-Mobilfunkstandort (11, 12, 20, 30, 40, 50) zum Ausgangs-Mobilfunkstandort (10) und für jeden Nachbar-Mobilfunkstandort (11, 12, 20, 30, 40, 50) mindestens ein Wichtungswert W, wie die jeweilige mindestens eine Antenne zu der mindestens einen Antenne des Ausgangs-Mobilfunkstandorts (10) ausgerichtet ist, berechnet werden, wobei potentielle Nachbar-Mobilfunkstandorte (11, 12, 20, 30, 40, 50) alle außer den geplanten Nachbar-Mobilfunkstandorten (11, 12, 20, 30, 40, 50) vorhandenen Standorte einer Umgebung des Ausgangs-Mobilfunkstandorts (10) sind und geplante Nachbar-Mobilfunkstandorte (11, 12, 20, 30, 40, 50) als Nachbarn für den Ausgangs-Mobilfunkstandort (10) vorgesehene Mobilfunkstandorte (11, 12, 20, 30, 40, 50) sind, die als solche in einer Datenbank hinterlegt und für ein potentielles Handover ausgehend von dem Ausgangs-Mobilfunkstandort (10) zur Verfügung stehen, so dass dem Ausgangs-Mobilfunkstandort (10) alle für ein Handover notwendigen Parameter der geplanten Nachbar-Mobilfunkstandorte (11, 12, 20, 30, 40, 50) zugänglich gemacht werden, wobei der Wichtungswert W auf Basis einer vorgegebenen mathematischen Funktion f gemäß $W = f(C_A, C_N)$ mit $C_A$ sind Strahl- und Lagedaten des Ausgangs-Mobilfunkstandorts (10) und $C_N$

sind Strahl- und Lagedaten des jeweiligen Nachbar-Mobilfunkstandorts (11, 12, 20, 30, 40, 50), als ganzzahliger Wert in einem Wertebereich von 0 bis 360 auf Basis der relativen geometrischen Lage des Ausgangs-Mobilfunkstandorts und des jeweiligen Nachbar-Mobilfunkstandorts zueinander und deren jeweiligen Hauptstrahlrichtungen berechnet wird, und für den Ausgangs-Mobilfunkstandort (10) eine jeweilige Handover-Anzahl zu allen Nachbar-Mobilfunkstandorten (11, 12, 20, 30, 40, 50) mittels eines Verkehrsmesssystems gemessen und in der Datenbank abgelegt wird,

wobei anhand des mindestens einen Wichtungswerts der mindestens einen Antenne des Ausgangs-Mobilfunkstandorts (10) zu der mindestens einen Antenne eines jeweiligen Nachbar-Mobilfunkstandorts (11, 12, 20, 30, 40, 50) und anhand der jeweiligen relativen Entfernung des jeweiligen Nachbar-Mobilfunkstandorts (11, 12, 20, 30, 40, 50) zu dem Ausgangs-Mobilfunkstandort (10) und unter Berücksichtigung der Handover-Anzahl zu dem Ausgangs-Mobilfunkstandort (10), ein Vorliegen von vorgegebenen Bedingungen geprüft wird, und zu löschende geplante Nachbar-Mobilfunkstandorte identifiziert und auf einer graphischen Benutzeroberfläche in Form von einer oder mehreren Listen angezeigt werden,

wobei ein oder mehrere geplante Nachbar-Mobilfunkstandorte als zu löschen identifiziert werden, wenn für den einen oder die mehreren geplanten Nachbar-Mobilfunkstandorte jeweils die folgende Bedingung erfüllt ist:

$$V > 1,5 \text{ und } W < 150,$$

wobei V die jeweilige relative Entfernung bezeichnet,

wobei die vorgeschlagene Löschung verworfen wird, falls die Anzahl der Handover einen bestimmten Schwellwert überschreitet,

wobei die Handover-Anzahl von dem Verkehrsmesssystem von dem Ausgangs-Mobilfunkstandort (10) zu jeweiligen Nachbar-Mobilfunkstandorten (11, 12, 20, 30, 40, 50) erfasst und gezählt wird, wobei jeweilige Handover von einer jeweiligen durch einen jeweiligen Sektor des Ausgangs-Mobilfunkstandorts (10) definierten Funkzelle zu jeweiligen durch die jeweiligen Sektoren der jeweiligen Nachbar-Mobilfunkstandorte (11, 12, 20, 30, 40, 50) definierten Funkzellen ausgewertet werden, so dass alle Verbindungsübergaben pro Funkzelle des Ausgangs-Mobilfunkstandorts (10) zu einer jeweiligen Funkzelle eines jeweiligen Nachbar-Mobilfunkstandorts (11, 12, 20, 30, 40, 50) betrachtet werden.

2. Verfahren nach Anspruch 1,
bei dem die Handover-Anzahl von dem Ausgangs-Mobilfunkstandort (10) zu jeweiligen Nachbar-Mobilfunkstandorten (11, 12, 20, 30, 40, 50) als jeweilige Absolut- bzw. Stückzahl pro Tag rechnergestützt erfasst und gezählt werden.

3. Verfahren nach Anspruch 1 oder 2,
bei dem die jeweilige Hauptstrahlrichtung der mindestens einen Antenne des Ausgangs-Mobilfunkstandorts (10), die jeweilige Hauptstrahlrichtung der jeweiligen mindestens einen Antenne eines jeweiligen Nachbar-Mobilfunkstandorts (11, 12, 20, 30, 40, 50), eine Richtung vom Ausgangs-Mobilfunkstandort (10) zum jeweiligen Nachbar-Mobilfunkstandort (11, 12, 20, 30, 40, 50) und eine Richtung vom jeweiligen Nachbar-Mobilfunkstandort (11, 12, 20, 30, 40, 50) zum Ausgangs-Mobilfunkstandort (10) messtechnisch bestimmt werden und in Winkelgrad angegeben werden, wobei 0° einer nördlichen, 120° einer südöstlichen und 240° einer südwestlichen Himmelsrichtung entspricht, und der mindestens eine Wichtungswert jeweils mit Hilfe von verschachtelten, die jeweiligen bestimmten Hauptstrahlrichtungen und Richtungen miteinander korrelierenden Wenn-Funktionen berechnet wird.

4. Verfahren nach Anspruch 3,
bei dem der Wichtungswert gemäß folgender Formel berechnet wird:

W = Int(Wenn([W1] Ist Nicht Null;Wenn([W2] Ist Nicht Null;[W1]+[W2];" ");" ")),
wobei W den Wichtungswert, Int (x) die Ganzzahlfunktion und Wenn(x) die Wenn-Funktion bezeichnet und:

W1=Wenn([B1]>=[D1];(Wenn((180-[B1]+[D1])>0;180-[B1]+[D1];180-(360-[B1]+[D1])));(Wenn((180-[D1]+[B1])>0;180-[D1]+[B1];[D1]-180-[B1])))

W2=Wenn([A1]>=[C1];(Wenn((180-[A1]+[C1])>0;180-[A1]+[C1];180-(360-[A1]+[C1])));(Wenn((180-[C1]+[A1])>0;180-[C1]+[A1];-[A1]+[C1]-180)))
wobei
A1 die Hauptstrahlrichtung der mindestens einen Antenne des Ausgangs-Mobilfunkstandorts (10),
B1 die jeweilige Hauptstrahlrichtung der jeweiligen mindestens einen Antenne des jeweiligen Nachbar-Mobilfunkstandorts (11, 12, 20, 30, 40, 50),
C1 die Richtung vom Ausgangs-Mobilfunkstandort zum jeweiligen Nachbar-Mobilfunkstandort (11, 12, 20, 30, 40, 50), und D1 die Richtung vom jeweiligen Nachbar-Mobilfunkstandort (11, 12, 20, 30, 40, 50) zum Ausgangs-Mobilfunkstandort (10) ist.

5. Verfahren nach Anspruch 3 oder 4, bei dem die Hauptstrahlrichtung der mindestens einen Antenne des Ausgangs-Mobilfunkstandorts (10), die jeweilige Hauptstrahlrichtung der jeweiligen mindestens einen Antenne eines jeweiligen Nachbar-Mobilfunkstandorts (11, 12, 20, 30, 40, 50), die Richtung vom Ausgangs-Mobilfunkstandort (10) zum jeweiligen Nachbar-Mobilfunkstandort (11, 12, 20, 30, 40, 50) und die Richtung vom jeweiligen Nachbar-Mobilfunkstandort (11, 12, 20, 30, 40, 50) zum Ausgangs-Mobilfunkstandort (10) wie folgt bestimmt werden:

A1: Wenn([AA] Nicht Wie "Halle*";Wenn([AA] Nicht Wie "DV0*";Peg_all_gsm.AZI;[C1]);[C1])
B1: Wenn([AA_1] Wie "DV0*" Oder [AA_1] Wie "Halle";Wenn([C1]<180;[C1]+180;[C1]-180);[AZI_1])
C1: Int(Wenn([la]*[ba]>0;Wenn([la]>0;[Ca];180+[Ca]);Wenn([la]<0;360+[Ca];180+[C a])))
D1: Wenn(([C1]+180)<360;[C1]+180;[C1]-180)
Ca: 180*(ArcTan([la]/[ba]))/3,1415
la: -(3600*Teil([Länge];1;2)+60*Teil([Länge];3;2)+Teil([Länge];5;2)-3600*Links([Länge_1];2)-60*Teil([Länge_1];3;2)-Teil([Länge_1];5;2))/51,1+0,0000001
ba: -(3600*Teil([Breite];1;2)+60*Teil([Breite];3;2)+Teil([Breite];5;2)-3600*Links([Breite_1];2)-60*Teil([Breite_1];3;2)-Teil([Breite_1];5;2))/32,01+0,0000001
wobei
A1 die Hauptstrahlrichtung der mindestens einen Antenne des Ausgangs-Mobilfunkstandorts (10),
B1 die jeweilige Hauptstrahlrichtung der jeweiligen mindestens einen Antenne des jeweiligen Nachbar-Mobilfunkstandorts (11, 12, 20, 30, 40, 50),
C1 die Richtung vom Ausgangs-Mobilfunkstandort (10) zum jeweiligen Nachbar-Mobilfunkstandort (11, 12, 20, 30, 40, 50), und
D1 die Richtung vom jeweiligen Nachbar-Mobilfunkstandort (11, 12, 20, 30, 40, 50) zum Ausgangs-Mobilfunkstandort (10),
DV0* einen Rundstrahler, Halle* eine Indoorantenne, AZI die Hauptstrahlrichtung und AA die Antennenart bezeichnet, und die Endung "_1" einen jeweiligen Wert des jeweiligen Nachbar-Mobilfunkstandorts (11, 12, 20, 30, 40, 50) gekennzeichnet.

6. Verfahren nach einem der voranstehenden Ansprüche, bei dem die relative Entfernung für jeden Nachbar-Mobilfunkstandort (11, 12, 20, 30, 40, 50) zum Ausgangs-Mobilfunkstandort (10) als die Entfernung des Nachbar-Mobilfunkstandorts (11, 12, 20, 30, 40, 50) im Verhältnis zur durchschnittlichen Entfernung der geplanten Nachbar-Mobilfunkstandorte zum Ausgangs-Mobilfunkstandort (10) berechnet wird.

7. Verfahren nach einem der voranstehenden Ansprüche, das für jede Nachbarschaft zwischen Mobilfunkstandorten innerhalb des Mobilfunknetzes durchgeführt wird, wobei jeder Mobilfunkstandort innerhalb des Mobilfunknetzes einmal als Ausgangs-Mobilfunkstandort (10) und entsprechend der Anzahl der Nachbar-Mobilfunkstandorte (11, 12, 20, 30, 40, 50) dieses jeweiligen Mobilfunkstandorts mehrere Male als Nachbar-Mobilfunkstandort behandelt (11, 12, 20, 30, 40, 50) wird.

8. Verfahren nach einem der voranstehenden Ansprüche, das für jede Mobilfunktechnik, insbesondere für GSM, UMTS und LTE, gesondert durchgeführt wird.

**Claims**

1. Computer-implemented method for geometric planning of neighboring mobile radio locations (11, 12, 20, 30, 40, 50) for an originating mobile radio location (10) in a mobile radio network,

wherein the originating mobile radio location (10) and each neighboring mobile radio location (11, 12, 20, 30, 40, 50) each have at least one mobile radio antenna with a main beam direction, a method in which geographic coordinates of the originating mobile radio location (10), planned neighboring mobile radio locations (11, 12, 20, 30, 40, 50), and potential neighboring mobile radio locations (11, 12, 20, 30, 40, 50) are determined and, on the basis of the geographical coordinates of the originating mobile radio location (10), the planned neighboring mobile radio locations (11, 12, 20, 30, 40, 50) and the potential neighboring mobile radio locations (11, 12, 20, 30, 40, 50), and their respective main beam directions as parameters, at least an average distance of the planned neighboring mobile radio locations (11, 12, 20, 30, 40, 50) to the originating mobile radio location (10), a relative distance for each neighboring mobile radio location (11, 12, 20, 30, 40, 50) to the originating mobile radio location (10) and for each neighboring mobile radio location (11, 12, 20, 30, 40, 50) at least one weighting value W, how the respective at least one antenna is aligned to the at least one antenna of the originating mobile radio location (10), are calculated,

wherein potential neighboring mobile radio locations (11, 12, 20, 30, 40, 50) are all existing locations of a vicinity of the originating mobile radio location (10), without the planned neighboring mobile radio locations (11, 12, 20, 30, 40, 50), and the planned neighboring mobile radio locations (11, 12, 20, 30, 40, 50) are mobile radio locations (11, 12, 20, 30, 40, 50) which are intended as neighbors for the originating mobile radio location (10) and are stored as such in a database and are available for a potential handover starting from the originating mobile radio location (10), so that all parameters of the planned neighboring mobile radio locations (11, 12, 20, 30, 40, 50) necessary for a handover are made available to the originating mobile radio location (10),

wherein the weighting value W is calculated on the basis of a predetermined mathematical function f corresponding to $W = f(C_A, C_N)$ as an integer value in a value range from 0 to 360 on the basis of the relative geometric position of the originating mobile radio location and the respective neighboring mobile radio location to each other and their respective main beam directions, wherein $C_A$ stands for the beam and location data of the originating mobile radio location (10) and $C_N$ stands for the beam and location data of the respective neighboring mobile radio location (11, 12, 20, 30, 40, 50), and a respective number of handovers to all neighboring mobile radio locations (11, 12, 20, 30, 40, 50) is measured for the originating mobile radio location (10) by means of a traffic measurement system and stored in the database,

wherein, on the basis of the at least one weighting value of the at least one antenna of the originating mobile radio location (10) to the at least one antenna of a respective neighboring mobile radio location (11, 12, 20, 30, 40, 50) and on the basis of the respective relative distance of the respective neighboring mobile radio location (11, 12, 20, 30, 40, 50) to the originating mobile radio location (10) and taking into account the number of handovers to the originating mobile radio location (10), a presence of predetermined conditions is checked, and planned neighboring mobile radio locations to be deleted are identified and displayed on a graphical user interface in the form of one or more lists, wherein one or more planned neighboring mobile radio locations are identified as to be deleted if the following condition is satisfied for each of the one or more planned neighboring mobile radio locations:

> V> 1.5 and W< 150,
> wherein V denotes the respective relative distance,
> wherein the proposed deletion is discarded if the number of handovers exceeds a certain threshold,
> wherein the number of handovers from the originating mobile radio location (10) to respective neighboring mobile radio locations (11, 12, 20, 30, 40, 50) is detected and counted by the traffic measurement system, wherein respective handovers from a respective radio cell defined by a respective sector of the originating mobile radio location (10) to respective radio cells defined by the respective sectors of the respective neighboring mobile radio locations (11, 12, 20, 30, 40, 50) are evaluated, so that all connection handovers per radio cell of the originating mobile radio location (10) to a respective radio cell of a respective neighboring mobile radio location (11, 12, 20, 30, 40, 50) are considered.

2. The method according to claim 1, in which the number of handovers from the originating mobile radio location (10) to respective neighboring mobile radio locations (11, 12, 20, 30, 40, 50) is detected and counted by computer as the respective absolute or unit number per day.

3. The method according to claim 1 or 2, in which the respective main beam direction of the at least one antenna of the originating mobile radio location (10), the respective main beam direction of the respective at least one antenna of a respective neighboring mobile radio location (11, 12, 20, 30, 40, 50), a direction from the originating mobile radio location (10) to the respective neighboring mobile radio location (11, 12, 20, 30, 40, 50) and a direction from the respective neighboring mobile radio location (11, 12, 20, 30, 40, 50) to the originating mobile radio location (10) are determined by measurement and are specified in angular degrees, wherein 0° corresponds to a northerly, 120° to a southeasterly and 240° to a southwesterly cardinal direction, and the at least one weighting value is calculated in each case with the aid of interleaved if-functions correlating the respective determined main beam directions and directions with each other.

4. The method according to claim 3, in which the weighting value is calculated according to the following formula:

W = Int(If([W1] Is Not Zero;If([W2] Is Not Zero;[W1]+[W2];" ");" ")), wherein W denotes the weighting value, Int (x) denotes the integer function, and If(x) denotes the if function and:

W1=If([B1]>=[D1];(If((180-[B1]+[D1]>0;180-[B1]+[D1];180-(360-[B1]+[D1])));(If((180-[D1]+[B1]>0;180-[D1]+[B1];[D1]-180-[B1])))

W2=If([A1]>=[C1];(If((180-[A1]+[C1]>0;180-[A1]+[C1];180-(360-[A1]+[C1])));(If((180-[C1]+[A1])>0;18O-[C1]+[A1];-[A1]+[C1]-180)))

wherein

A1 is the main beam direction of the at least one antenna of the originating mobile radio location (10),

B1 is the respective main beam direction of the respective at least one antenna of the respective neighboring mobile radio location (11, 12, 20, 30, 40, 50),

C1 is the direction from the originating mobile radio location to the respective neighboring mobile radio location (11, 12, 20, 30, 40, 50), and

D1 is the direction from the respective neighboring mobile location (11, 12, 20, 30, 40, 50) to the originating mobile radio location (10).

5. The method according to claim 3 or 4, in which the main beam direction of the at least one antenna of the originating mobile radio location (10), the respective main beam direction of the respective at least one antenna of a respective neighboring mobile radio location (11, 12, 20, 30, 40, 50), the direction from the originating mobile radio location (10) to the respective neighboring mobile radio location (11, 12, 20, 30, 40, 50) and the direction from the respective neighboring mobile radio location (11, 12, 20, 30, 40, 50) to the originating mobile radio location (10) are determined as follows:

A1: If([AA] Not Like "Hall*";If([AA] Not Like "DV0*";Peg_all_gsm.AZI;[C1]);[C1]) B1: If([AA_1] Like "DV0*" Or [AA_1] Like "Hall";If([C1]<180;[C1]+180;[C1]-180);[AZI_1])

C1: Int(If([Ia]*[ba]>0;If([Ia]>0;[Ca];180+[Ca]);If([Ia]<0;360+[Ca];180+[Ca])))

D1: If(([C1]+18O)<360;[C1]+180;[C1]-180)

Ca: 180*(ArcTan([Ia]/[ba]))/3,1415

Ia: -(3600*Part([Length];1;2)+60*Part([Length];3;2)+Part([Length];5;2)-3600*Left([Length_1];2)-60*Part([Length_1];3;2)-Part([Length_1];5;2))/51,1+0,0000001

ba: -(3600*Part([Width];1;2)+60*Part([Width];3;2)+Part([Width];5;2)-3600*Left([Width_1];2)-60*Part([Width_1];3;2)-Teil([Width_1];5;2))/32,01 +0,0000001

wherein

A1 is the main beam direction of the at least one antenna of the originating mobile radio location (10),

B1 is the respective main beam direction of the respective at least one antenna of the respective neighboring mobile radio location (11, 12, 20, 30, 40, 50),

C1 is the direction from the originating mobile radio location (10) to the respective neighboring mobile radio location (11, 12, 20, 30, 40, 50), and

D1 is the direction from the respective neighboring mobile location (11,12, 20, 30, 40, 50) to the originating mobile radio location (10),

DV0* denotes an omnidirectional antenna, Hall* denotes an indoor antenna, AZI denotes the main beam direction, and AA denotes the antenna type, and the suffix "_1" denotes a respective value of the respective neighboring mobile radio location (11, 12, 20, 30, 40, 50).

6. The method according to any of the preceding claims,
wherein the relative distance for each neighboring mobile radio location (11, 12, 20, 30, 40, 50) to the originating mobile radio location (10) is calculated as the distance of the neighboring mobile radio location (11, 12, 20, 30, 40, 50) relative to the average distance of the planned neighboring mobile radio locations to the originating mobile radio location (10).

7. The method according to any of the preceding claims,
which is performed for each vicinity between mobile radio locations within the mobile radio network, wherein each mobile radio location within the mobile radio network is treated once as an originating mobile radio location (10) and several times as a neighboring mobile radio location (11, 12, 20, 30, 40, 50) according to the number of neighboring mobile radio locations (11, 12, 20, 30, 40, 50) of that respective mobile radio location.

8. The method according to any of the preceding claims,
which is carried out separately for each mobile communications technology, in particular for GSM, UMTS and LTE.

**Revendications**

1. Procédé mis en œuvre sur ordinateur, destiné à la conception géométrique des sites voisins de téléphonie mobile (11, 12, 20, 30, 40, 50) par rapport à un site initial de téléphonie mobile (10) dans un réseau de téléphonie mobile,

le site initial de téléphonie mobile (10) et chaque site voisin de téléphonie mobile (11, 12, 20, 30, 40, 50) présentant chacun au moins une antenne de téléphonie mobile ayant une direction principale de rayonnement,

ledit procédé consistant à déterminer les coordonnées géographiques du site initial de téléphonie mobile (10), celles des sites voisins de téléphonie mobile (11, 12, 20, 30, 40, 50) prévus et celles des sites voisins de téléphonie mobile (11, 12, 20, 30, 40, 50) potentiels, et à calculer, sur la base des coordonnées géographiques du site initial de téléphonie mobile (10), des sites voisins de téléphonie mobile (11, 12, 20, 30, 40, 50) prévus et des sites voisins de téléphonie mobile (11, 12, 20, 30, 40, 50) potentiels et de leurs directions principales de rayonnement en tant que paramètres, les au moins une distance moyenne entre les sites voisins de téléphonie mobile prévus (11, 12, 20, 30, 40, 50) et le site initial de téléphonie mobile (10), une distance relative entre chaque site voisin de téléphonie mobile (11, 12, 20, 30, 40, 50) et le site initial de téléphonie mobile (10), et pour chaque site voisin de téléphonie mobile (11, 12, 30, 40, 50), au moins une pondération W déterminant l'orientation de l'au moins une antenne par rapport à l'au moins une antenne du site initial de téléphonie mobile (10),

les sites voisins de téléphonie mobile (11, 12, 20, 30, 40, 50) potentiels étant tous, des sites dans le voisinage du site initial de téléphonie mobile (10), sans les sites voisins de téléphonie mobile (11, 12, 20, 30, 40, 50) prévus, et les sites voisins de téléphonie mobile (11, 12, 20, 30, 40, 50) prévus étant des sites de téléphonie mobile (11, 12, 20, 30, 40, 50), qui sont prévus en tant que voisins du site initial de téléphonie mobile (10) et enregistrés en tant que tels dans une banque de données et mis à disposition pour un potentiel transfert intercellulaire (handover) à partir du site initial de téléphonie mobile (10), afin que le site initial de téléphonie mobile (10) puisse accéder à tous les paramètres des sites voisins de téléphonie mobile (11, 12, 20, 30, 40, 50) prévus, nécessaires à un transfert intercellulaire,

la pondération W étant calculée sur la base d'une formule mathématique prédéfinie f suivante : $W = f(C_A, C_N)$, où $C_A$ représente les données du rayonnement et de la position du site initial de téléphonie mobile (10) et $C_N$ représente les données du rayonnement et de la position du site voisin de téléphonie mobile (11, 12, 20, 30, 40, 50) correspondant, sous forme d'un nombre entier dans une fourchette de valeurs entre 0 et 360, sur la base de la position géométrique par rapport au site initial de téléphonie mobile et de celle du site voisin de téléphonie mobile correspondant (l'un par rapport à l'autre) ainsi que de leurs directions principales de rayonnement, et pour le site initial de téléphonie mobile (10) un nombre de transferts intercellulaires vers tous les sites voisins de téléphonie mobile (11, 12, 20, 30, 40, 50) étant mesuré au moyen d'un système de mesure du trafic et enregistré dans la banque de données, l'existence de conditions prédéfinies étant examinée à l'aide de l'au moins une pondération de l'au moins une antenne du site initial de téléphonie mobile (10) par rapport à l'au moins une antenne du site voisin de téléphonie mobile (11, 12, 20, 30, 40, 50) correspondant et à l'aide de la distance relative correspondante entre le site voisin de téléphonie mobile (11, 12, 20, 30, 40, 50) correspondant et le site initial de téléphonie mobile (10) et compte tenu du nombre de transferts intercellulaires vers le site initial de téléphonie mobile (10), les sites voisins de téléphonie mobile prévus à éliminer étant identifiés et affichés sur une interface utilisateur graphique sous la forme d'une ou de plusieurs listes,

un ou plusieurs sites voisins de téléphonie mobile prévus étant identifiés comme éliminables, s'ils remplissent chacun la condition suivante :

$$V > 1,5 \text{ et } W < 150,$$

où V représente la distance relative correspondante,

l'élimination proposée étant rejetée, si le nombre de transferts intercellulaires franchit un seuil déterminé,

le nombre de transferts intercellulaires entre le site initial de téléphonie mobile (10) et les sites voisins de téléphonie mobile (11, 12, 20, 30, 40, 50) correspondants étant identifié et calculé par le système de mesure du trafic, les transferts intercellulaires examinés étant ceux qui s'effectuent à partir d'une cellule radio définie par un secteur du site initial de téléphonie mobile (10) vers les cellules radio définies par les secteurs correspondants des sites voisins de téléphonie mobile (11, 12, 20, 30, 40, 50) correspondants, de façon à prendre en considération tous les transferts intercellulaires entre chaque cellule radio du site initial de téléphonie mobile (10) vers une cellule radio correspondante d'un site voisin de téléphonie mobile (11, 12, 20, 30, 40, 50) correspondant.

2. Procédé selon la revendication 1,

pour lequel le nombre de transferts intercellulaires entre le site initial de téléphonie mobile (10) et les sites voisins de téléphonie mobile (11, 12, 20, 30, 40, 50) correspondants est identifié et calculé par ordinateur en tant que nombre absolu ou nombre unitaire par jour.

3. Procédé selon la revendication 1 ou 2, pour lequel la direction principale de rayonnement correspondante de l'au moins une antenne du site initial de téléphonie mobile (10), la direction principale de rayonnement correspondante de l'au moins une antenne d'un site voisin de téléphonie mobile (11, 12, 20, 30, 40, 50) correspondant, une direction à partir du site initial de téléphonie mobile (10) vers le site voisin de téléphonie mobile (11, 12, 20, 30, 40, 50) correspondant et une direction à partir du site voisin de téléphonie mobile (11, 12, 20, 30, 40, 50) correspondant vers le site initial de téléphonie mobile (10) sont déterminées par la technique de mesure et exprimées en degrés, où l'angle de 0° correspond à un point cardinal nord, celui de 120° correspond à un point cardinal sud-est et celui de 240° correspond à un point cardinal sud-ouest, et l'au moins une pondération est calculée respectivement à l'aide des formules SI imbriquées corrélant entre elles les directions principales de rayonnement correspondantes déterminées et des directions.

4. Procédé selon la revendication 3, pour lequel la pondération est calculée selon la formule suivante :

W = Int(Si([W1] n'est pas nul;Si([W2] n'est pas nul;[W1]+[W2];" ");" ")), où W représente la pondération, Int (x) représente la fonction de nombre entier et Si(x) représente la formule SI :

W1=Si([B1]>=[D1];(Si((180-[B1]+[D1])>0;180-[B1]+[D1];180-(360-[B1]+[D1])));(Si((180-[D1]+[B1])>0;180-[D1]+[B1];[D1]-180-[B1])))

W2=Si([A1]>=[C1];(Si((180-[A1]+[C1])>0;180-[A1]+[C1];180-(360-[A1]+[C1])));(Si((180-[C1]+[A1])>0; 18O-[C1]+[A1];-[A1]+[C1]-180)))
où
A1 représente la direction principale de rayonnement de l'au moins une antenne du site initial de téléphonie mobile (10),
B1 représente la direction principale de rayonnement de l'au moins une antenne du site voisin de téléphonie mobile (11, 12, 20, 30, 40, 50),
C1 représente la direction à partir du site initial de téléphonie mobile vers le site voisin de téléphonie mobile (11, 12, 20, 30, 40, 50) correspondant et
D1 représente la direction à partir du site voisin de téléphonie mobile (11, 12, 20, 30, 40, 50) correspondant vers le site initial de téléphonie mobile (10).

5. Procédé selon la revendication 3 ou 4, pour lequel la direction principale de rayonnement de l'au moins une antenne du site initial de téléphonie mobile (10), la direction principale de rayonnement correspondante de l'au moins une antenne correspondante d'un site voisin de téléphonie mobile (11, 12, 20, 30, 40, 50) correspondant, la direction à partir du site initial de téléphonie mobile (10) vers le site voisin de téléphonie mobile (11, 12, 20, 30, 40, 50) correspondant et la direction à partir du site voisin de téléphonie mobile (11, 12, 20, 30, 40, 50) correspondant vers le site initial de téléphonie mobile (10) sont déterminées comme suit :

A1 : Si([AA] n'est pas "hall*";Si([AA] n'est pas "DV0*";Peg_all_gsm.AZI;[C1]);[C1]) B1 : Si([AA_1] est "DV0*" ou [AA_1] est "hall";Si([C1]<180;[C1]+180;[C1]-180) ;[AZI_1])
C1 : Int(Si([la]*[ba]>0;Si([la]>0;[Ca];180+[Ca]);Si([la]<0;360+[Ca];180+[Ca])))
D1 : Si(([C1]+180)<360;[C1]+180;[C1]-180)
Ca : 180*(ArcTan([la]/[ba]))/3,1415
la : -(3600*part([longueur];1;2)+60*part([longueur];3;2)+part([longueur];5;2)-3600*gauche([longueur_1];2)-60*part([longueur_1];3;2)-part([longueur_1];5;2))/51,1+0,0000001
ba : -(3600*part([largeur];1;2)+60*part([largeur];3;2)+part([largeur];5;2)-3600*gauche([largeur_1];2)-60*part([largeur_1];3;2)-part([largeur_1];5;2))/32,01 +0,0000001
où
A1 représente la direction principale de rayonnement de l'au moins une antenne du site initial de téléphonie mobile (10),
B1 représente la direction principale de rayonnement de l'au moins une antenne du site voisin de téléphonie mobile (11, 12, 20, 30, 40, 50),
C1 représente la direction à partir du site initial de téléphonie mobile (10) vers le site voisin de téléphonie mobile (11, 12, 20, 30, 40, 50) correspondant et
D1 représente la direction à partir du site voisin de téléphonie mobile (11, 12, 20, 30, 40, 50) correspondant vers le site initial de téléphonie mobile (10),
DV0* désigne une antenne omnidirectionnelle, hall* désigne une antenne d'intérieur, AZI désigne la direction principale de rayonnement et AA désigne le type d'antenne, et la terminaison « _1 » identifie une valeur correspondante du site voisin de téléphonie mobile (11, 12, 20, 30, 40, 50) correspondant.

6. Procédé selon l'une des revendications précédentes,
   pour lequel la distance relative entre chaque site voisin de téléphonie mobile (11, 12, 20, 30, 40, 50) et le site initial de téléphonie mobile (10) est calculée en tant que distance du site voisin de téléphonie mobile (11, 12, 20, 30, 40, 50) par rapport à la distance moyenne entre le site voisin de téléphonie mobile prévu et le site initial de téléphonie mobile (10).

7. Procédé selon l'une des revendications précédentes,
   qui est réalisé pour chaque zone voisine entre les sites de téléphonie mobile au sein du réseau de téléphonie mobile, chaque site de téléphonie mobile du réseau de téléphonie mobile étant traité une fois en tant que site initial de téléphonie mobile (10) et, en fonction du nombre de sites voisins de téléphonie mobile (11, 12, 20, 30, 40, 50) autour du site de téléphonie mobile correspondant, plusieurs fois en tant que site voisin de téléphonie mobile (11, 12, 20, 30, 40, 50).

8. Procédé selon l'une des revendications précédentes,
   qui est réalisé séparément pour chaque type de technologie mobile, notamment pour GSM, UMTS et LTE.

10    11

20

21

**Fig. 1a**

10    11

30

31

**Fig. 1b**

10

13

40

41

**Fig. 1c**

10

13

51

50

**Fig. 1d**

**Figur 1**

**Figur 2**

**IN DER BESCHREIBUNG AUFGEFÜHRTE DOKUMENTE**

**In der Beschreibung aufgeführte Patentdokumente**

- WO 2009083035 A1